(19) Europäisches Patentamt
European Patent Office
Office européen des brevets

(11) EP 4 704 168 A1

(12) **EUROPEAN PATENT APPLICATION**
published in accordance with Art. 153(4) EPC

(43) Date of publication:
**04.03.2026 Bulletin 2026/10**

(21) Application number: **24796721.9**

(22) Date of filing: **03.04.2024**

(51) International Patent Classification (IPC):
***H01M 4/131*** *(2010.01)* ***H01M 4/36*** *(2006.01)*
***H01M 4/62*** *(2006.01)* ***H01M 4/505*** *(2010.01)*
***H01M 4/525*** *(2010.01)* ***H01M 4/1391*** *(2010.01)*

(52) Cooperative Patent Classification (CPC):
Y02E 60/10

(86) International application number:
**PCT/JP2024/013759**

(87) International publication number:
**WO 2024/224963 (31.10.2024 Gazette 2024/44)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **28.04.2023 JP 2023074040**

(71) Applicant: **Panasonic Intellectual Property Management Co., Ltd.**
**Kadoma-shi, Osaka 571-0057 (JP)**

(72) Inventors:
- **KAWAKITA, Akihiro**
  **Kadoma-shi, Osaka 571-0057 (JP)**
- **INOUE, Katsuya**
  **Kadoma-shi, Osaka 571-0057 (JP)**
- **OGASAWARA, Takeshi**
  **Kadoma-shi, Osaka 571-0057 (JP)**

(74) Representative: **Novagraaf International SA**
**Chemin de l'Echo 3**
**1213 Onex, Geneva (CH)**

# (54) POSITIVE ELECTRODE FOR NONAQUEOUS ELECTROLYTE SECONDARY BATTERY, AND METHOD FOR MANUFACTURING POSITIVE ELECTRODE FOR NONAQUEOUS ELECTROLYTE SECONDARY BATTERY

(57) A positive electrode (11) for a nonaqueous electrolyte secondary battery according to the present disclosure is characterized by having a positive electrode mixture layer (31), and is characterized in that: the positive electrode mixture layer (31) includes a positive electrode active material and PTFE; the positive electrode active material includes a lithium-containing transition metal composite oxide having a layered structure; a sulfonic acid compound represented by formula (I) is present on the surfaces of secondary particles of the lithium-containing transition metal composite oxide; and, when the positive electrode mixture layer (31) is divided into three equal parts in the thickness direction, if said parts in order from a positive electrode core body (30) side are defined as a first region, a second region, and a third region, the content (s) of PTFE in the first region, the content (t) of PTFE in the second region, and the content (u) of PTFE in the third region satisfy (us)/(s+t+u)≤±10%. (In the formula, A represents a group 1 element or a group 2 element, R represents a hydrocarbon group, and n is 1 or 2.)

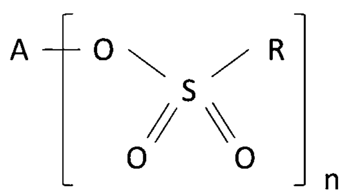

( I )

EP 4 704 168 A1

Figure 2

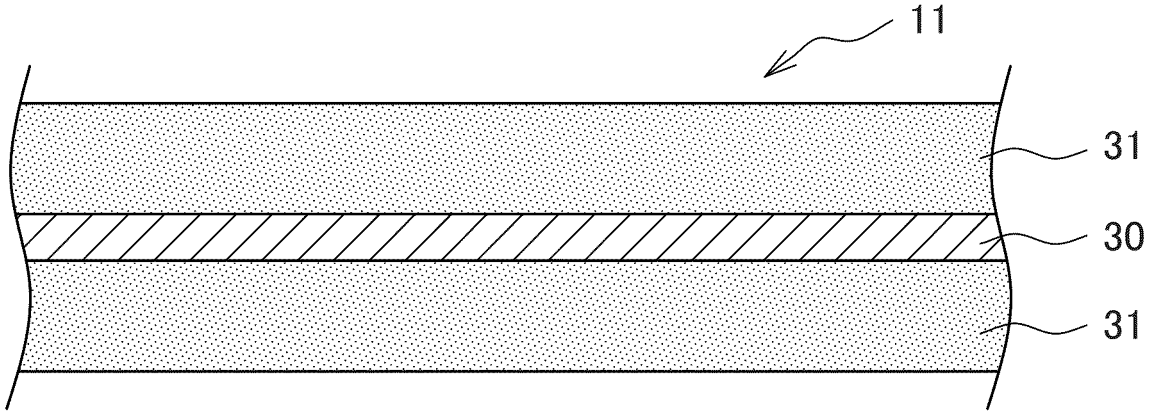

## Description

TECHNICAL FIELD

The present disclosure relates to a positive electrode for a non-aqueous electrolyte secondary battery and a method for producing a positive electrode for a non-aqueous electrolyte secondary battery.

BACKGROUND ART

In recent years, applications of non-aqueous electrolyte secondary batteries have expanded to power sources for electric vehicles and power storage devices for utilizing renewable natural energy. Since positive electrodes significantly affect battery characteristics, such as battery capacity, output characteristics, and cycle characteristics, many studies have been made on the positive electrode. Patent Literature 1 discloses a positive electrode for a non-aqueous electrolyte secondary battery using a lithium-containing transition metal composite oxide with low soluble Li salts scattered on the surface as a positive electrode active material for the purpose of reducing the reaction resistance when stored at high temperatures.

CITATION LIST

PATENT LITERATURE

PATENT LITERATURE 1: Japanese Unexamined Patent Application Publication No. 2019-169286

SUMMARY

In non-aqueous electrolyte secondary batteries, it is an important object to improve output characteristics while maintaining good cycle characteristics. Conventional techniques, including those described in Patent Literature 1, have not sufficiently achieved this object, and there is still much room for improvement.

The positive electrode for a non-aqueous electrolyte secondary battery in one aspect of the present disclosure includes a positive electrode for a non-aqueous electrolyte secondary battery, the positive electrode having a positive electrode core and a positive electrode mixture layer formed on a surface of the positive electrode core, wherein the positive electrode mixture layer includes a positive electrode active material and PTFE; the positive electrode active material includes a lithium-containing transition metal composite oxide having a layered structure; the lithium-containing transition metal composite oxide is represented by the general formula $Li_xNi_aCo_bMn_cM_dO_{2-y}$, wherein $0.8 < x < 1.2$, $0.75 \leq a \leq 0.95$, $0 \leq b \leq 0.15$, $0 \leq c \leq 0.25$, $0 \leq d \leq 0.10$, $0 \leq y < 0.05$, $a + b + c + d = 1$, and M represents at least one element selected from the group consisting of W, Mg, Mo, Nb, Ti, Si, Al, and Zr, and is composed of secondary particles each formed by aggregation of primary particles; a sulfonate compound represented by formula (1) is present on surfaces of the secondary particles; and when the positive electrode mixture layer is divided into three equal parts in a thickness direction to form a first region, a second region, and a third region in order from a positive electrode core side, a content (s) of PTFE in the first region, a content (t) of PTFE in the second region, and a content (u) of PTFE in the third region satisfy $(u - s)/(s + t + u) \leq \pm 10\%$,

[Formula 1]

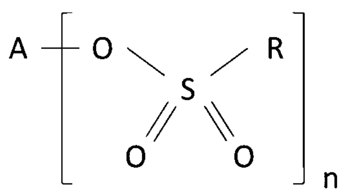

(I)

wherein A represents a group I or group II element, R represents a hydrocarbon group, and n represents 1 or 2.

According to the positive electrode for a non-aqueous electrolyte secondary battery in one aspect of the present disclosure, a non-aqueous electrolyte secondary battery having improved output characteristics while maintaining good cycle characteristics can be provided.

BRIEF DESCRIPTION OF DRAWINGS

FIG. 1 is a longitudinal sectional view of a non-aqueous electrolyte secondary battery as an example of an embodiment.

FIG. 2 is a sectional view of a positive electrode as an example of an embodiment.

FIG. 3 is a view illustrating a mixing step in a production process of a positive electrode as an example of an embodiment.

FIG. 4 is a view illustrating a stretching step in a production process of a positive electrode as an example of an embodiment.

FIG. 5 is a view illustrating a bonding step in a production process of a positive electrode as an example of an embodiment.

DESCRIPTION OF EMBODIMENTS

In the layered rock-salt structure of the lithium-containing transition metal composite oxide, a layer of a transition metal such as Ni, a Li layer, and an oxygen layer are present, and Li ions present in the Li layer reversibly enter and exit, whereby the charge-discharge reaction of a battery proceeds. Generally, a lithium nickelate-based lithium-containing transition metal composite oxide including Ni as a main component is known as a high-capacity positive electrode active material. From the viewpoint of increasing the capacity of a battery, the content ratio of Ni in the lithium-containing transition metal composite oxide is preferably greater than or equal to 75 mol% relative to the total molar amount of metal elements excluding Li.

As a result of studies conducted by the present inventors, it has been revealed that a non-aqueous electrolyte secondary battery with improved output characteristics can be realized by allowing the sulfonate compound represented by formula (I) above to be present on the surfaces of the secondary particles of the lithium-containing transition metal composite oxide to be used as the positive electrode active material, probably because the reaction resistance in the positive electrode is reduced by the function of the sulfonate compound. However, a new problem of decreased cycle characteristics associated with the presence of the sulfonate compound has arisen, presumably because simply allowing the sulfonate compound to be present on the surfaces of the secondary particles does not improve the diffusivity of the non-aqueous electrolyte in the positive electrode mixture layer, resulting in a distribution of reactions in the thickness direction of the positive electrode mixture layer.

The present inventors have further conducted extensive studies and found that a non-aqueous electrolyte secondary battery with improved output and cycle characteristics can be realized by uniformly dispersing polytetrafluoroethylene (PTFE) in the positive electrode mixture layer while allowing the sulfonate compound to be present on the surfaces of the secondary particles of the lithium-containing transition metal composite oxide. More specifically, when the positive electrode mixture layer is divided into three equal parts in the thickness direction to form a first region, a second region, and a third region from a positive electrode core side, a content (s) of PTFE in the first region, a content (t) of PTFE in the second region, and a content (u) of PTFE in the third region satisfy $(u - s)/(s + t + u) \leq \pm 10\%$. By uniformly dispersing PTFE in the positive electrode mixture layer, the diffusivity of the non-aqueous electrolyte in the positive electrode mixture layer is improved to make the distribution of the reaction more uniform in the thickness direction of the positive electrode mixture layer. As a result, the battery has improved cycle characteristics.

Hereinafter, one aspect of an embodiment of the non-aqueous electrolyte secondary battery according to the present disclosure will be described in detail with reference to the drawings. Note that the scope of the present disclosure includes a configuration composed of selective combination of constituents of a plurality of embodiments and modified examples described below. In the present specification, the expression "greater than or equal to xx and less than or equal to yy" refers to a range including the upper limit xx and the lower limit yy.

Hereinafter, a cylindrical battery including a wound electrode assembly 14 accommodated in a bottomed cylindrical outer case 16 will be illustrated as the non-aqueous electrolyte secondary battery, but the outer case of the battery is not limited to a cylindrical outer case. The non-aqueous electrolyte secondary battery according to the present disclosure may be, for example, a rectangular battery comprising a rectangular outer case, a coin-shaped battery comprising a coin-shaped outer case, or a pouch battery comprising an outer case constituted by a laminated sheet including a metal layer and a resin layer. The electrode assembly is not limited to the wound-type, and may be a laminate electrode assembly in which a plurality of positive electrodes and a plurality of negative electrodes are alternately stacked one by one via separators. In addition, the design of the non-aqueous electrolyte secondary battery according to the present disclosure is not limited to the design of the illustrated non-aqueous electrolyte secondary battery, and a known non-aqueous electrolyte secondary battery design may be applied.

FIG. 1 is an axial sectional view of a cylindrical non-aqueous electrolyte secondary battery 10 as an example of an

embodiment. As shown in FIG. 1, the non-aqueous electrolyte secondary battery 10 comprises a wound electrode assembly 14, a non-aqueous electrolyte, and an outer case 16 that houses the electrode assembly 14 and the non-aqueous electrolyte. The electrode assembly 14 includes a positive electrode 11, a negative electrode 12, and a separator 13 and has the positive electrode 11 and the negative electrode 12 being wound with the separator 13. The outer case 16 is a bottomed cylindrical metal container having an opening on one side in the axial direction, and the opening of the outer case 16 is closed off by a sealing assembly 17. Hereinafter, for convenience of explanation, the sealing assembly 17 side of the battery is described as the top, and the bottom side of the outer case 16 is described as the bottom.

The positive electrode 11, the negative electrode 12, and the separator 13, which constitute the electrode assembly 14, are all elongated rectangular members, and are alternately laminated in the radial direction of the electrode assembly 14 by being spirally wound in the longitudinal direction. The separator 13 isolates the positive electrode 11 from the negative electrode 12. The negative electrode 12 is, for example, disposed so as to sandwich the positive electrode 11. The electrode assembly 14 comprises a positive electrode lead 20 connected to the positive electrode 11 by means of welding or the like, and a negative electrode lead 21 connected to the negative electrode 12 by means of welding or the like. In the electrode assembly 14, the longitudinal direction of the positive electrode 11 and the negative electrode 12 corresponds to the winding direction, while the transverse direction of the positive electrode 11 and the negative electrode 12 corresponds to the axial direction. That is, end surfaces of the positive electrode 11 and the negative electrode 12 in the transverse direction form end surfaces of the electrode assembly 14 in the axial direction.

Insulating plates 18 and 19 are respectively arranged above and below the electrode assembly 14. In the example illustrated in FIG. 1, the positive electrode lead 20 extends through a through-hole in the insulating plate 18 to the side of the sealing assembly 17, and the negative electrode lead 21 extends outside the insulating plate 19 to the side of the bottom of the outer case 16. The positive electrode lead 20 is connected to the lower surface of an internal terminal plate 23 of the sealing assembly 17, by means of welding or the like, and a cap 27, the top plate of the sealing assembly 17 electrically connected to the internal terminal plate 23, serves as a positive electrode terminal. The negative electrode lead 21 is connected to the inner surface of the bottom of the outer case 16 by means of welding or the like, and the outer case 16 serves as a negative electrode terminal.

A gasket 28 is provided between the outer case 16 and the sealing assembly 17 to ensure that the interior of the battery is tightly sealed. The outer case 16 includes a grooved portion 22 formed to have a part of a side surface portion projected inward and support the sealing assembly 17. The grooved portion 22 is preferably annularly formed along the peripheral direction of the outer case 16, supporting the sealing assembly 17 by the upper surface thereof. The sealing assembly 17 is fixed to an upper part of the outer case 16 by means of the grooved portion 22 and an opening end portion of the outer case 16 which is crimped to the sealing assembly 17.

The sealing assembly 17 has a structure in which an internal terminal plate 23, a lower vent member 24, an insulating member 25, an upper vent member 26, and a cap 27 are layered in the order from the side of the electrode assembly 14. The members forming the sealing assembly 17 each have, for example, a disk shape or a ring shape, and the members except for the insulating member 25 are each electrically connected to one another. The lower vent member 24 and the upper vent member 26 are connected at each center part, and the insulating member 25 is interposed between the peripheral edges of the vent members. When the internal pressure of the battery rises due to abnormal heat generation, the lower vent member 24 deforms and breaks so as to push up the upper vent member 26 toward the side of the cap 27, and the current path between the lower vent member 24 and the upper vent member 26 is disconnected. When the internal pressure further increases, the upper vent member 26 breaks to emit gas from the opening portion of the cap 27.

Hereinafter, the positive electrode 11, the negative electrode 12, the separator 13, and the non-aqueous electrolyte, all of which constitute the non-aqueous electrolyte secondary battery 10, particularly, the positive electrode 11 will be described in detail.

[Positive Electrode]

As shown in FIG. 2, the positive electrode 11 has a positive electrode core 30 and a positive electrode mixture layer 31 formed on the surface of the positive electrode core 30. The positive electrode mixture layer 31 is preferably formed on both the surfaces of the positive electrode core 30. As the positive electrode core 30, a foil of a metal that is stable in the potential range of the positive electrode 11, such as aluminum or an aluminum alloy, and a film with the metal disposed on the surface layer, or the like can be used. The thickness of the positive electrode core 30 is, for example, greater than or equal to 10 μm and less than or equal to 30 μm.

The positive electrode mixture layer 31 includes a positive electrode active material and PTFE as a binder. The thickness of the positive electrode mixture layer 31 is greater than or equal to 10 μm and less than or equal to 150 μm, for example, on one side of the positive electrode core 30. The positive electrode mixture layer 31 may also include a conductive agent. Examples of the conductive agent included in the positive electrode mixture layer 31 include carbon-based particles such as carbon black (CB) including acetylene black (AB) and Ketjenblack, carbon nanotubes (CNT), graphene, and graphite. The particle diameter of the conductive agent is, for example, greater than or equal to 0.01 μm and

less than or equal to 0.1 μm. Accordingly, the conductive agent can enter and adhere to a depression on the surface of the positive electrode active material. The content ratio of the conductive agent in the positive electrode mixture layer 31 can be, for example, greater than or equal to 0.001 mass% and less than or equal to 5.0 mass%, particularly greater than or equal to 0.01 mass % and less than or equal to 2.5 mass%. In particular, when carbon nanotubes are used as the conductive agent, a small amount of the conductive agent can be used.

The positive electrode active material includes a lithium-containing transition metal composite oxide having a layered structure. The lithium-containing transition metal composite oxide is in the form of secondary particles each formed by aggregation of primary particles. The particle diameter of the primary particles forming the secondary particles of the lithium-containing transition metal composite oxide is, for example, greater than or equal to 0.02 μm and less than or equal to 2 μm. The particle diameter of the primary particles is measured as the diameter of a circumscribed circle in particle images observed by scanning electron microscopy (SEM). The average particle diameter of the secondary particles of the lithium-containing transition metal composite oxide is, for example, greater than or equal to 2 μm and less than or equal to 30 μm. As used herein, the average particle diameter refers to the volume-based median diameter (D50). The D50 means the particle diameter at which the cumulative frequency in the volume-based particle size distribution reaches 50% from the smaller particle side, which is also referred to as the median diameter. The particle size distribution of the secondary particles of the lithium-containing transition metal composite oxide can be measured using a laser diffraction particle size distribution measuring device (e.g., MT3000II, manufactured by MicrotracBEL Corp.), with water used as the dispersion medium.

The lithium-containing transition metal composite oxide has a layered structure. Examples of the layered structures of the lithium-containing transition metal composite oxide include a layered structure belonging to the space group R-3m and a layered structure belonging to the space group C2/m. From the viewpoint of high capacity, stability of the crystal structure, and the like, the lithium-containing transition metal composite oxide preferably has a layered structure belonging to the space group R-3m. The layered structure of the lithium-containing transition metal composite oxide may include a transition metal layer and a Li layer.

The lithium-containing transition metal composite oxide is represented by the general formula $Li_xNi_aCo_bMn_cM_dO_{2-y}$, wherein $0.8 < x < 1.2$, $0.75 \leq a \leq 0.95$, $0 \leq b \leq 0.15$, $0 \leq c \leq 0.25$, $0 \leq d \leq 0.10$, $0 \leq y < 0.05$, $a + b + c + d = 1$, and M represents at least one element selected from the group consisting of W, Mg, Mo, Nb, Ti, Si, Al, and Zr. Note that the positive electrode active material may include a composite oxide other than the lithium-containing transition metal composite oxide represented by the above general formula, and the content of the positive electrode active material is, for example, greater than or equal to 90 mass% relative to the mass of the positive electrode mixture layer.

A high-capacity battery can be obtained by adjusting the content ratio of Ni in the lithium-containing transition metal composite oxide to greater than or equal to 75 mol% and less than or equal to 95 mol%. The higher the content ratio of Ni, the higher the capacity of the battery. The content ratio of elements constituting the lithium-containing transition metal composite oxide can be measured using an inductively coupled plasma atomic emission spectrometer (ICP-AES), an electron probe microanalyzer (EPMA), an energy dispersive X-ray spectrometer (EDX), or the like.

The content ratio of Co in the lithium-containing transition metal composite oxide is greater than or equal to 0 mol% and less than or equal to 15 mol%, and Co is an optional component. In other words, the lithium-containing transition metal composite oxide may not contain Co. The lithium-containing transition metal composite oxide may improve the heat resistance of the battery by containing Co.

The content ratio of Mn in the lithium-containing transition metal composite oxide is greater than or equal to 0 mol% and less than or equal to 25 mol%, and Mn is an optional component. In other words, the lithium-containing transition metal composite oxide may not contain Mn. The lithium-containing transition metal composite oxide may stabilize the crystal structure by containing Mn.

The content ratio of M (where M represents at least one element selected from the group consisting of W, Mg, Mo, Nb, Ti, Si, Al and Zr) in the lithium-containing transition metal composite oxide is greater than or equal to 0 mol% and less than or equal to 10 mol%, and M is an optional component. In other words, the lithium-containing transition metal composite oxide may be free of M.

A sulfonate compound represented by formula (I) is present on the surfaces of the secondary particles of the lithium-containing transition metal composite oxide:

[Formula 2]

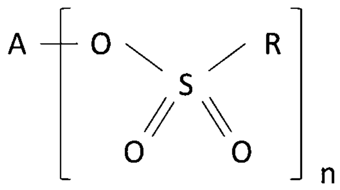

(I)

wherein A represents a group I or group II element, R represents a hydrocarbon group, and n represents 1 or 2. A preferably represents a group I element. Especially, Li or Na is more preferable, and Li is particularly preferable.

The sulfonate compound may be scattered so as to cover at least a part of the surfaces of the secondary particles of the lithium-containing transition metal composite oxide or may be present so as to cover the entire surface of the secondary particles. The sulfonate compound may be present on the surfaces of the primary particles of the lithium-containing transition metal composite oxide. The presence of the sulfonate compound on the surfaces of the secondary particles of the lithium-containing transition metal composite oxide reduces the reaction resistance in the positive electrode, making it possible to increase the charge-discharge depth. As a result, the output characteristics of the battery can be improved.

In formula (I), R preferably represents an alkyl group. The number of carbon atoms in the alkyl group is preferably less than or equal to 5, and more preferably less than or equal to 3. From the viewpoint of reducing the reaction resistance and the like, a preferred example of R is an alkyl group having less than or equal to 3 carbon atoms, and especially, A preferably represents a methyl group. Note that a part of carbon-bonded hydrogens in R may be substituted with fluorine. In addition, n in formula (I) is preferably 1.

Specific examples of the sulfonate compound include lithium methanesulfonate, lithium ethanesulfonate, lithium propanesulfonate, sodium methanesulfonate, sodium ethanesulfonate, magnesium methanesulfonate, and lithium fluoromethanesulfonate. Especially, at least one selected from the group consisting of lithium methanesulfonate, lithium ethanesulfonate, and sodium methanesulfonate is preferable, and lithium methanesulfonate is particularly preferable.

The sulfonate compound reduces the reaction resistance in the positive electrode 11. With the reduced resistance, the charge-discharge depth can be increased, and the output characteristics can be improved. The sulfonate compound exerts the effect even in an extremely small amount but is preferably present on the surfaces of the secondary particles of the composite oxide in an amount of greater than or equal to 0.1 mass% relative to the mass of the lithium-containing transition metal composite oxide. Although not particularly limited, the upper limit of the content ratio of the sulfonate compound is preferably 2.0 mass% relative to the mass of the lithium-containing transition metal composite oxide from the viewpoint of cycle characteristics. Thus, one example of a preferred range for the amount of the sulfonate compound is greater than or equal to 0.1 mass% and less than or equal to 2.0 mass% relative to the mass of the lithium-containing transition metal composite oxide.

The presence of the sulfonate compound on the surfaces of the secondary particles of the lithium-containing transition metal composite oxide can be confirmed by Fourier transform infrared spectroscopy (FT-IR). In an infrared absorption spectrum obtained by FT-IR, the positive electrode active material including lithium methanesulfonate, for example, have absorption peaks near 1238 $cm^{-1}$, 1175 $cm^{-1}$, 1065 $cm^{-1}$, and 785 $cm^{-1}$. The peaks near 1238 $cm^{-1}$, 1175 $cm^{-1}$, and 1065 $cm^{-1}$ are peaks caused by SO stretching vibration derived from lithium methanesulfonate. The peak near 785 $cm^{-1}$ is an peak caused by CS stretching vibration derived from lithium methanesulfonate. Note that the presence of a positive electrode active material including a sulfonate compound other than lithium methanesulfonate can be confirmed from the absorption peak derived from the sulfonate compound in the infrared absorption spectrum.

The presence of the sulfonate compound can also be confirmed by X-ray photoelectron spectroscopy (XPS). In the spectrum obtained by XPS, the positive electrode active material including lithium methanesulfonate exhibits a peak with a binding energy in the vicinity of 165 eV to 170 eV and an intensity (c/s) of 200 to 1000. The presence of the sulfonate compound on the surfaces of the secondary particles of the lithium-containing transition metal composite oxide can be confirmed by ICP, atomic absorption spectrometry, radiation XRD measurement, TOF-SIMS, or the like.

On the surface of the secondary particles of the lithium-containing transition metal composite oxide, a metal compound may be present in addition to the sulfonate compound. The metal compound includes, for example, one or more metal elements selected from the group consisting of Sr, Ca, W, Zr, rare earths, and Al. Examples of the Sr-containing compound include SrO, $Sr(OH)_2$, and $SrCO_3$. Examples of the compound containing Ca include CaO, $Ca(OH)_2$, and $CaCO_3$. Examples of the compound containing W include $WO_3$. Examples of the compound containing Al include $Al_2O_3$. Examples of the Zr-containing compound include $ZrO_2$, $Zr(OH)_4$, $Zr(CO_3)_2$, and $Zr(SO_4)_2 \cdot 4H_2O$. Examples of the compound containing rare-earth include oxides, hydroxides, carbonates, sulfates, nitrates, and phosphates of rare earths. The metal compound may contain a plurality of these metal elements, and examples thereof include $SrAlO_4$, and $CaAlO_4$. The metal compound may further contain Li, and examples thereof include lithium tungstate.

A non-metal compound may be present on the surfaces of the lithium-containing transition metal composite oxide. The non-metal compound includes, for example, one or more non-metal elements selected from the group consisting of P and B. Examples of the compound containing P include $Li_{3-x}H_xPO_4$ ($0 \leq x \leq 3$). Examples of the compound containing B include $H_3BO_3$, $Li_3BO_3$, and $Li_2B_4O_7$.

Here, the alkali amount of the positive electrode active material determined by the Warder method is preferably less than or equal to 150 μmol/g, more preferably less than or equal to 125 μmol/g, and still more preferably less than or equal to 100 μmol/g. In this case, the reaction between excess Li in the positive electrode active material and the non-aqueous electrolyte is suppressed, thereby reducing the generation of various gases, such as carbon dioxide gas, hydrogen carbonate gas, and CO gas, during charge and discharge. As a result, expansion of the battery during charge and discharge is suppressed. The alkali amount determined by the Warder method may be greater than or equal to 5 μmol/g or greater than or equal to 10 μmol/g. Therefore, the range of the alkali amount determined by the Warder method is preferably greater than or equal to 5 μmol/g and less than or equal to 150 μmol/g, more preferably greater than or equal to 5 μmol/g and less than or equal to 125 μmol/g, and still more preferably greater than or equal to 5 μmol/g and less than or equal to 100 μmol/g. The alkali amount determined by the Warder method may be greater than or equal to 10 μmol/g and less than or equal to 150 μmol/g, greater than or equal to 10 μmol/g and less than or equal to 125 μmol/g, or greater than or equal to 10 μmol/g and less than or equal to 100 μmol/g. The amount of alkali included in the positive electrode active material can be reduced by performing a washing step in the production process of the positive electrode active material described below. Examples of the alkali component included in the positive electrode active material include lithium hydroxide (LiOH) and lithium carbonate ($Li_2CO_3$). Lithium hydroxide and lithium carbonate may be present inside the particles of the composite oxide at the interface of the primary particles and on the surface of the secondary particles each formed by aggregation of the primary particles.

A specific quantitative method of the alkali component extracted from the positive electrode active material is as follows.

(1) The positive electrode active material is added in an amount of 1 g to 30 mL of pure water and stirred to prepare a suspension obtained by dispersing the positive electrode active material in water.
(2) The suspension is filtered, and pure water is added to the filtrate to make up the volume to 70 mL, thereby obtaining a filtrate including water-soluble alkali components eluted from the positive electrode active material.
(3) While measuring the pH of the filtrate, hydrochloric acid is added dropwise little by little to determine the amount of hydrochloric acid consumed up to the first inflection point of the pH curve (around pH 8), denoted as X mol/g, and the amount consumed up to the second inflection point (around pH 4), denoted as Y mol/g. Note that the inflection points correspond to the peak positions of the differential value with respect to the titration volume.
(4) The alkaline amount is then calculated as the value of X - (Y - X).

The positive electrode active material as an example of an embodiment can be produced by the method described below. Note that the production method described herein is merely an example, and the production method of the positive electrode active material is not limited to this method.

The production process of the positive electrode active material includes a synthesis step of mixing a metal oxide with a Li compound or the like to obtain a mixture and firing the mixture to obtain a lithium-containing transition metal composite oxide, a washing step of washing the fired product with water and dehydrating the washed product to obtain a cake-like composition, a drying step of drying the cake-like composition to obtain a powder-like composition, and an addition step of adding at least one of the group consisting of a sulfonate compound and a sulfonic acid solution to the cake-like composition or the powder-like composition.

In the synthesis step, for example, a metal oxide containing greater than or equal to 75 mol% and less than or equal to 95 mol% of Ni, greater than or equal to 0 mol% and less than or equal to 15 mol% of Co, greater than or equal to 0 mol% and less than or equal to 25 mol% of Mn, and greater than or equal to 0 mol% and less than or equal to 10 mol% of M (where M represents at least one element selected from W, Mg, Mo, Nb, Ti, Si, Al, and Zr) and a Li compound are mixed to obtain a mixture.

The metal oxide can be obtained, for example, by adding an alkaline solution such as sodium hydroxide dropwise while stirring a solution of a metal salt including Ni and an arbitrary metal element (Co, Mn, M etc.), adjusting the pH to the alkaline side (e.g., greater than or equal to 8.5 and less than or equal to 12.5), thereby precipitating (coprecipitating) a composite hydroxide including Ni and an arbitrary metal element, and heat-treating the composite hydroxide. The heat treatment temperature is not particularly limited, but is in the range of, for example, greater than or equal to 250°C and less than or equal to 600°C.

Examples of the Li compounds include $Li_2O_3$, LiOH, $Li_2O_2$, $Li_2O$, $LiNO_3$, $LiNO_2$, $Li_2SO_4$, $LiOH \cdot H_2O$, LiH, and LiF. The mixing ratio of the metal oxide and the Li compound is preferably such that the molar ratio between the total amount of metal elements in the metal oxide and Li is in the range of greater than or equal to 1:0.8 and less than or equal to 1:1.2, and more preferably greater than or equal to 1:1.0 and less than or equal to 1:1.1, from the viewpoint of facilitating the

adjustment of the parameters to the defined ranges.

Next, the synthesis step includes a firing step of firing the obtained mixture. The firing step is, for example, a multi-stage firing step including at least a first firing step of firing the mixture at greater than or equal to 300°C and less than or equal to 680°C in an oxygen stream and a second firing step of firing a fired product obtained in the first firing step at a temperature exceeding 680°C in an oxygen stream. In the first firing step, the temperature is increased to a first set temperature of less than or equal to 680°C at a first temperature rising rate of greater than or equal to 0.2°C/min and less than or equal to 4.5°C/min. In the second firing step, the temperature is increased to a second set temperature of less than or equal to 900°C at a temperature rising rate of greater than or equal to 0.5°C/min and less than or equal to 3.5°C/min. Note that a plurality of first and second temperature rising rates may be set for each temperature region as long as the first and second temperature rising rates are within the above-defined ranges.

The holding time of the first set temperature in the first firing step is preferably less than or equal to 5 hours, and more preferably less than or equal to 3 hours. The holding time of the first set temperature refers to the duration during which the first set temperature is maintained after reaching the first set temperature, and the holding time may be zero. The holding time of the second set temperature in the second firing step is preferably greater than or equal to 1 hour and less than or equal to 10 hours, and more preferably greater than or equal to 1 hour and less than or equal to 5 hours. The holding time of the second set temperature refers to the duration during which the second set temperature is maintained after reaching the second set temperature. The firing of the mixture is performed, for example, in an oxygen stream with an oxygen concentration of greater than or equal to 60%, and the flow rate of the oxygen stream is greater than or equal to 0.2 mL/min and less than or equal to 4 mL/min per 10 $cm^3$ of the firing furnace or greater than or equal to 0.3 L/min per 1 kg of the mixture.

In the washing step, the lithium-containing transition metal composite oxide is washed with water and dehydrated to obtain a cake-like composition. The lithium-containing transition metal composite oxide may be in particulate form as obtained from the synthesis step. Through washing, unreacted portions of the lithium compound added in the synthesis step, as well as impurities other than the lithium compound, can be removed. During water washing, for example, greater than or equal to 300 g and less than or equal to 5000 g of lithium-containing transition metal composite oxide may be charged per 1 L of water. Note that the water washing may be repeated a plurality of times, and the dehydration after the water washing can be performed by, for example, a filter press.

In the drying step, the cake-like composition obtained in the washing step is dried to obtain a powder-like composition. The drying step may be performed under a vacuum atmosphere. The drying conditions are, for example, greater than or equal to 150°C and less than or equal to 400°C for greater than or equal to 0.5 hours and less than or equal to 15 hours.

In the addition step, at least one of the group consisting of a sulfonate compound and a sulfonic acid solution is added to the cake-like composition obtained in the washing step or the powder-like composition obtained in the drying step. Accordingly, the sulfonate compound can be adhered to the surface of the lithium-containing transition metal composite oxide. At least one of the group consisting of a sulfonate compound and a sulfonic acid solution is preferably added to the cake-like composition. The sulfonate compound added may be in the form of powder or solution. The sulfonic acid solution is, for example, a methanesulfonic acid solution obtained by dissolving methanesulfonic acid in water. The Li compound remains in the cake-like composition, and the remaining Li compound is dissolved in water contained in the cake-like composition, whereby the sulfonate compound including Li is formed even when the sulfonic acid solution is added. From the viewpoint of enhancing the effects of the present disclosure, a lithium compound or a lithium compound solution may be added to the cake-like composition or powder-like composition together with the sulfonic acid solution. Alternatively, a mixed solution prepared in advance by mixing the sulfonic acid solution with the lithium compound or lithium compound solution may be added to the cake-like composition or powder-like composition. The lithium compound may be, for example, LiOH, and the lithium compound solution may be, for example, an LiOH solution obtained by dissolving LiOH in water. The amounts of the lithium compound and the sulfonic acid solution added to the cake-like composition preferably satisfy the relation $0 \leq$ Li compound/sulfonic acid $\leq 1.3$ in terms of molar ratio. The amount of the sulfonate compound or sulfonic acid added is preferably greater than or equal to 0.1 mass% and less than or equal to 1 mass%, and more preferably greater than or equal to 0.3 mass% and less than or equal to 0.8 mass% relative to the mass of the lithium-containing transition metal composite oxide. The concentrations of the sulfonic acid solution and the sulfonate compound solution are each, for example, greater than or equal to 0.5 mass% and less than or equal to 40 mass%. Note that the addition step may be performed during or after the washing step, or during or after the drying step, and the timing of implementation may be appropriately changed.

A metal compound including one or more metal elements selected from the group consisting of Sr, Ca, W, Zr, rare earth elements, and Al, and a non-metal compound including one or more non-metal elements selected from the group consisting of P and B, may be adhered to the surface of the lithium-containing transition metal composite oxide by adding raw materials of the metal compound and the non-metal compound at any stage selected from during or after the synthesis step, during or after the washing step, during or after the drying step, or during the addition step. Examples of Sr raw materials include $Sr(OH)_2$, $Sr(OH)_2 \cdot 8H_2O$, SrO, $SrCO_3$, $SrSO_4$, $Sr(NO_3)_2$, $SrCl_2$, and $SrAlO_4$. Examples of Ca raw

materials include $Ca(OH)_2$, CaO, $CaCO_3$, $CaSO_4$, $Ca(NO_3)_2$, $CaCl_2$, and $CaAlO_4$. Examples of Zr raw materials include $Zr(OH)_4$, $ZrO_2$, $Zr(CO_3)_2$, and $Zr(SO_4)_2 \cdot 4H_2O$. Examples of rare earth raw materials include rare earth oxides, hydroxides, and carbonates. Examples of W raw materials include tungsten oxide ($WO_3$) and lithium tungstates ($Li_2WO_4$, $Li_4WO_5$, $Li_6W_2O_9$). A solution containing W may also be used as a W raw material. Examples of Al raw materials include $Al_2O_3$, $Al(OH)_3$, and $Al_2(SO_4)_3$, although Al derived from the lithium-containing transition metal composite oxide may also be used. Examples of P raw materials include $Li_{3-x}H_xPO_4$ ($0 \leq x \leq 3$). Examples of B raw materials include $H_3BO_3$, $Li_3BO_3$, and $Li_2B_4O_7$. These compounds may be pulverized to appropriately adjust the particle shape or particle diameter or may be used after adjusting the water content, including hydrates.

The PTFE included in the positive electrode mixture layer 31 is a powder in a dry state, not a powder in a state of being dispersed in a dispersion such as water. Accordingly, the positive electrode mixture layer can be produced by a dry process described later. The positive electrode mixture layer 31 may include, in addition to PTFE, a binder such as polyvinylidene fluoride (PVdF), polyacrylonitrile (PAN), carboxymethylcellulose (CMC), styrene-butadiene rubber (SBR), nitrile-butadiene rubber (NBR), a polyimide resin, an acrylic resin, a polyolefin resin, or the like, which does not undergo fibrillation (fiber formation). In addition, the positive electrode mixture layer 31 may include a fibrillating binder other than PTFE as long as the scope of the present disclosure is not impaired.

The content ratio of PTFE in the positive electrode mixture layer 31 is preferably greater than or equal to 0.05 mass% and less than or equal to 5 mass%, and more preferably greater than or equal to 1 mass% and less than or equal to 3 mass%. In this case, the diffusivity of the non-aqueous electrolyte in the positive electrode mixture layer is further improved to make the distribution of the reaction more uniform in the thickness direction of the positive electrode mixture layer. As a result, the improvement in the cycle characteristics of the battery becomes remarkable. PTFE adheres to the surfaces of the positive electrode active material particles and entangles with the positive electrode active material. In other words, the positive electrode active material is held by PTFE present in a mesh form.

The PTFE includes fibrillated (fiberized) PTFE fibers. The PTFE fibers are obtained by fibrillating a PTFE raw material (PTFE particles) belonging to a fine powder that can be fibrillated through a mixing step described later. The median diameter of the PTFE fibers is preferably greater than or equal to 2 μm and less than or equal to 20 μm. The median diameter of the PTFE fibers can be measured with a particle size distribution analyzer. The expression that the median diameter of the PTFE fibers is greater than or equal to 2 μm and less than or equal to 20 μm indicates that the PTFE fibers have been micronized with respect to the PTFE particles.

As described above, most of the PTFE particles are fibrillated into PTFE fibers, but the PTFE may include PTFE particles that remain without being fibrillated. The PTFE particles may be secondary particles. The average particle diameter of the PTFE particles is, for example, greater than or equal to 100 μm and less than or equal to 700 μm, preferably greater than or equal to 100 μm and less than or equal to 500 μm, and more preferably greater than or equal to 100 μm and less than or equal to 400 μm. The average particle diameter of the PTFE particles can be obtained by observing the particles of the PTFE raw material with a SEM. Specifically, the outer shape of 100 randomly selected particles is specified, the long diameter (longest diameter) of each of the 100 particles is obtained to define the average of these as the average particle diameter of the PTFE particles.

The PTFE includes, for example, fibrous particles having an aspect ratio of greater than or equal to 1.5 in a proportion of greater than or equal to 20% relative to the total particles, and an average major axis size of the fibrous particles is greater than or equal to 1 μm and less than or equal to 20 μm. The use of PTFE including the fibrous particles enables the production of a positive electrode mixture layer exhibiting good moldability and high tensile strength.

The proportion of fibrous particles relative to the total particles can be calculated as follows:

(1) The PTFE including fibrous particles is imaged using a scanning electron microscope (SEM). The magnification may be set, for example, to greater than or equal to 300× and less than or equal to 1000x.
(2) The acquired image is imported into a computer and analyzed using image analysis software such as ImageJ, wherein all particles are classified into fibrous particles and particles having an aspect ratio of less than 1.5.
(3) The ratio of the fibrous particles to the total particles is calculated by dividing the number of the fibrous particles by the total number of all particles, that is, the sum of the numbers of the fibrous particles and the particles having an aspect ratio of less than 1.5.

The average major axis size of the fibrous particles can be calculated by analyzing the SEM images with image analysis software, measuring the major axis size (major axis length) of 100 fibrous particles having an aspect ratio of greater than or equal to 1.5, and averaging the measured values, as in the calculation of the proportion of the fibrous particles to the total particles described above.

The average aspect ratio of the fibrous particles may be greater than or equal to 2 and less than or equal to 20. The average aspect ratio of the fibrous particles can be calculated by analyzing an SEM image with image analysis software, measuring the aspect ratio (major axis/minor axis) of 100 fibrous particles having an aspect ratio of greater than or equal to 1.5, and averaging the measured values, as in the calculation of the average major axis size described above.

The PTFE including fibrous particles can be produced by fibrillating a PTFE raw material (PTFE particles) belonging to a fine powder that can be fibrillated (fiberized) by a dry mill such as a jet mill pulverizer. The PTFE raw material may be secondary particles. The average particle diameter of the PTFE raw material is, for example, greater than or equal to 100 μm and less than or equal to 700 μm, preferably greater than or equal to 100 μm and less than or equal to 500 μm, and more preferably greater than or equal to 100 μm and less than or equal to 400 μm. The average particle diameter of the PTFE raw materials can be obtained by observing the particles of the PTFE raw material with a SEM. Specifically, the outer shape of 100 randomly selected particles is specified, the long diameter (longest diameter) of each of the 100 particles is obtained to define the average of these as the average particle diameter of the PTFE raw materials. When PTFE powder including fibrous particles is produced by a jet mill pulverizer, the proportion of fibrous particles to the total particles can be adjusted to greater than or equal to 20% by suitably adjusting the feeding rate of the PTFE raw material, the milling pressure, or the like.

Here, when the positive electrode mixture layer 31 is divided into three equal parts in the thickness direction to form a first region, a second region, and a third region from the positive electrode core 30 side, the content (s) of PTFE in the first region, the content (t) of PTFE in the second region, and the content (u) of PTFE in the third region preferably satisfy $(u - s)/(s + t + u) \leq \pm 10\%$, more preferably satisfy $(u - s)/(s + t + u) \leq \pm 5\%$. Accordingly, PTFE is not ubiquitously present in a part but is substantially uniformly present in the whole in the thickness direction of the positive electrode mixture layer 31. Note that by using a dry process, which will be described later, the PTFE can be substantially uniformly present throughout the positive electrode mixture layer 31.

Furthermore, the positive electrode mixture layer 31 preferably has a mixture resistance of less than or equal to 20 Ω·cm, thereby enabling improvement of the output characteristics of the battery. The mixture resistance refers exclusively to the resistance of the positive electrode mixture layer 31. The mixture resistance can be measured, for example, using an electrode resistance measurement system manufactured by HIOKI E.E. Corporation, as follows.

(1) A positive electrode 11 cut into a size of 20 mm × 50 mm is prepared.
(2) The thickness of the positive electrode mixture layer 31 and the thickness of the positive electrode core 30 are measured and input as measurement parameters under the measurement conditions.
(3) An appropriate source current and voltage range are selected.
(4) The positive electrode 11 is set at a predetermined position, and a probe is brought into contact with the positive electrode 11 to measure the mixture resistance.

The positive electrode 11 as an example of an embodiment can be produced by the method described below. Note that the production method described herein is merely an example, and the method for producing the positive electrode 11 is not limited to this method.

FIGS. 3 to 5 are views schematically illustrating a production process of the positive electrode 11 as an example of the embodiment. The method for producing the positive electrode 11 includes a mixing step shown in FIG. 3, a stretching step shown in FIG. 4, and a bonding step shown in FIG. 5. In the mixing step, the positive electrode active material and PTFE are mixed to produce the positive electrode mixture particles 32 having a solid content concentration of substantially 100%. In the stretching step, the positive electrode mixture particles 32 are kneaded and simultaneously stretched to form a sheet, thereby producing the positive electrode mixture sheet 33. In the bonding step, the positive electrode mixture sheet 33 is bonded to the positive electrode core 30 to produce the positive electrode 11.

The method for producing the positive electrode 11 is a dry process of producing the positive electrode 11 using the positive electrode mixture layer 31 having a solid content concentration of substantially 100%. The dry process is a process of mixing the positive electrode active material particles with the binder particles without using a solvent, that is, mixing the positive electrode active material and the binder in a state where the solid content concentration is substantially 100%. The method for producing the positive electrode 11 according to the present disclosure does not require the use of a solvent, unlike a conventional method for producing the positive electrode 11. Here, the expression "does not require the use of a solvent" means not only that the solvent is not required as a raw material, but also that a drying step of the solvent is not required, and exhaust equipment or the like for the drying step is not required.

In the mixing step, as shown in FIG. 3, raw materials such as a positive electrode active material, PTFE, and a conductive agent are mixed in a mixer 40 to prepare positive electrode mixture particles 32. As the mixer 40, for example, a conventionally known mechanical stirring mixer can be used. Specific examples of the suitable mixer 40 include a cutter mill, a pin mill, a bead mill, a fine particle compounding device (a device in which a shear force is generated between a rotor having a special shape that rotates at a high speed inside a tank and an impact plate), a granulating machine, and a kneading machine such as a twin-screw extrusion kneading machine or a planetary mixer, which are devices capable of applying a mechanical shear force, and among them, a cutter mill, a fine particle compounding device, a granulating machine, and a twin-screw extrusion kneading machine are preferable. Thus, it is possible to fibrillate PTFE while mixing the raw materials. The processing time (time for applying shear force to the material) of the mixing step is preferably less than or equal to 15 minutes and may be, for example, greater than or equal to 0.5 minutes and less than or equal to 10

minutes. If the processing time is too long, the amount of conductive agent incorporated into the PTFE increases. In this case, the conductivity of the positive electrode mixture sheet significantly deteriorates, resulting in increased resistance and adversely affecting the battery characteristics.

The mixing step may include mixing the positive electrode active material and the conductive agent to produce a coated positive electrode active material, and mixing the coated positive electrode active material and the PTFE. By using the coated positive electrode active material made by mixing the positive electrode active material and the conductive agent, the time for mixing the coated positive electrode active material and the PTFE can be reduced. Thus, the amount of the conductive agent incorporated into the PTFE can be reduced. The coverage of the surface of the coated positive electrode active material with the conductive agent is, for example, greater than or equal to 10% and less than or equal to 60%. Irregularities are present on the surface of the coated positive electrode active material and the conductive agent preferably enters and adheres to the recessions in the irregularities, making it difficult for the conductive agent on the surface of the coated positive electrode active material to be taken up by PTFE during the mixing processing of the coated positive electrode active material and PTFE.

The method of dry-mixing the positive electrode active material and the conductive agent may be, for example, a mechanofusion method. The mechanofusion method is a dry-processing method performed in a mechanofusion reactor having a tubular chamber comprising a compression tool inside and rotating at a high speed. By placing the conductive agent and the positive electrode active material in the chamber and rotating the chamber, the particles are pressed against each other and against the chamber wall. The use of a compression tool and rotating at a high speed to generate centrifugal forces facilitates the adhesive bonding between the conductive agent and the positive electrode active material. Examples of the mechanofusion reactor include the "Novirta" (registered trademark) mill or the "Mechanofusion" (registered trademark) mill manufactured by HOSOKAWA MICRON CORPORATION (Japan), the "Hybrid Dicer" (registered trademark) mill manufactured by Nara Machinery Co., Ltd., the "Balance Gran" manufactured by Freund-Turbo Corporation, and the "COMPOSI" manufactured by NIPPON COKE & ENGINEERING CO., LTD., etc.

Next, in the stretching step, as shown in FIG. 4, the positive electrode mixture particles 32 are kneaded and simultaneously stretched using a pair of rolls 41 to form a sheet. The pair of rolls 41 are disposed with a predetermined gap to rotate in the same direction. The positive electrode mixture particles 32 are supplied to the gap between the pair of rolls 41 to be compressed and stretched into a sheet by the pair of rolls 41. The linear pressure by the pair of rolls 41 is, for example, greater than or equal to 1 t/cm and less than or equal to 3 t/cm. The pair of rolls 41 have, for example, the same roll diameters. The temperature of the pair of rolls 41 is not particularly limited, and may be, for example, room temperature or may be heated to greater than or equal to room temperature.

By passing the obtained positive electrode mixture sheet 33 between the pair of rolls 41 again, the PTFE is loosened and dispersed. In other words, by passing the positive electrode mixture particles 32 between the pair of rolls 41 twice or more, the in-plane dispersibility of the PTFE is improved. The number of passes of the positive electrode mixture particles 32 and the positive electrode mixture sheet 33 formed of the positive electrode mixture particles 32 between the pair of rolls 41 is preferably greater than or equal to 2 and less than or equal to 50, more preferably greater than or equal to 3 and less than or equal to 40, and particularly preferably greater than or equal to 5 and less than or equal to 20. The stretching step is not limited to a method using only a pair of rolls, and may include a step of stretching using another pair of rolls having different roll diameters, peripheral velocities, gaps, or the like.

The thickness of the positive electrode mixture sheet 33 obtained after the stretching step can be controlled, for example, by the gap between the pair of rolls 41, the peripheral speed, or the number of stretching treatment. In the stretching step, the positive electrode mixture particles 32 are preferably formed into a sheet using the pair of rolls 41 having a peripheral speed ratios different by a factor of greater than or equal to two. By making the peripheral speed ratios of the pair of rolls 41 different, for example, the positive electrode mixture sheet 33 can be thinned easily, leading to improved productivity. The positive electrode active material density in the positive electrode mixture sheet 33 is, for example, greater than or equal to 3.2 g/$cm^3$ and less than or equal to 4.0 g/$cm^3$.

Next, in the bonding step, as shown in FIG. 5, the positive electrode mixture sheet 33 is bonded to the positive electrode core 30 to obtain the positive electrode 11 in which the mixture layer composed of the positive electrode mixture layer 31 is provided on the surface of the positive electrode core 30. Although FIG. 5 shows the positive electrode mixture layer 31 joined to only one surface of the positive electrode core 30, the positive electrode mixture layer 31 is preferably joined to both surfaces of the positive electrode core 30. The two positive electrode mixture layers 31 may be joined to both surfaces of the positive electrode core 30 at the same time, or one sheet may be joined to one surface of the positive electrode core 30 and then the other sheet may be joined to the other surface. The positive electrode mixture sheet 33 may be bonded to the positive electrode core 30 via an adhesive layer or the like.

In the bonding step, the positive electrode mixture sheet 33 is bonded to the surface of the positive electrode core 30 using a pair of rolls 42. The pair of rolls 42 have, for example, the same roll diameter, which are disposed with a predetermined gap, and rotate in the same direction at the same peripheral speed. The temperature of the pair of rolls 42 is, for example, greater than or equal to 25°C and less than or equal to 300°C. The linear pressure applied by the pair of rolls 42 is preferably greater than or equal to 0.1 t/cm and less than or equal to 5 t/cm, and more preferably greater than or equal to

0.2 t/cm and less than or equal to 3 t/cm.

[Negative Electrode]

The negative electrode 12 may have, for example, a negative electrode core and a negative electrode mixture layer formed on the surface of the negative electrode core, or a metal Li foil may be used as the negative electrode 12. The negative electrode 12 may have a negative electrode core, and lithium metal may be deposited on the surface of the negative electrode core by charging. When the negative electrode 12 has a negative electrode mixture layer, the negative electrode mixture layer is preferably formed on both the surfaces of the negative electrode core. As the negative electrode core, a metal foil that is stable in the potential range of the negative electrode 12, such as copper or a copper alloy, or a film with the metal disposed on a surface layer may be used. The thickness of the negative electrode core is, for example, greater than or equal to 5 μm and less than or equal to 30 μm. The negative electrode mixture layer includes, for example, a negative electrode active material and a binder. The thickness of the negative electrode mixture layer is, for example, greater than or equal to 10 μm and less than or equal to 150 μm on one side of the negative electrode core. The negative electrode 12 can be produced, for example, by coating a negative electrode mixture slurry including a negative electrode active material and a binder on the surface of the negative electrode core, drying the coating, and rolling the dried coating to form the negative electrode mixture layer on both the surfaces of the negative electrode core.

As the negative electrode active material included in the negative electrode mixture layer, any material capable of reversibly intercalating and releasing lithium ions may be used without particular limitation, and generally, carbon materials such as graphite are used. The graphite may be natural graphite, such as flake graphite, lump graphite, or earthy graphite, or artificial graphite, such as lump artificial graphite or graphitized mesophase carbon microbeads. In addition, as the negative electrode active material, metals that alloy with Li, such as Si and Sn, metal compounds including Si, Sn, or the like, or lithium titanium composite oxides may be used. Furthermore, materials provided with a carbon coating on these may also be used. For example, Si-containing compounds represented by $SiO_x$ ($0.5 \leq x \leq 1.6$) or Si-containing compounds in which fine Si particles are dispersed in a lithium silicate phase represented by $Li_{2y}SiO_{(2+y)}$ ($0 < y < 2$), may be used in combination with graphite.

Examples of the binder included in the negative electrode mixture layer include styrene-butadiene rubber (SBR), nitrile-butadiene rubber (NBR), carboxymethyl cellulose (CMC) or salts thereof, polyacrylic acid (PAA) or a salt thereof (such as PAA-Na, PAA-K, or partially neutralized salts), and polyvinyl alcohol (PVA). These may be used singly or in combination with two or more kinds thereof.

[Separator]

As the separator 13, a porous sheet having ion permeability and insulation properties may be used. Specific examples of the porous sheet include microporous films, woven fabrics, and nonwoven fabrics. Suitable materials for the separator 13 include polyolefins such as polyethylene and polypropylene, and cellulose. The separator 13 may have a single-layer structure or a multilayer structure. Further, a heat-resistant resin layer such as an aramid resin layer may be formed on the surface of the separator 13.

A filler layer including an inorganic filler may be formed at the interface between the separator 13 and at least one of the group consisting of the positive electrode 11 and the negative electrode 12. Examples of the inorganic filler include oxides containing metal elements such as Ti, Al, Si, and Mg, and phosphate compounds. The filler layer can be formed by applying a slurry containing the filler to the surface of the positive electrode 11, the negative electrode 12, or the separator 13.

[Non-Aqueous Electrolyte]

The non-aqueous electrolyte has ion conductivity (for example, lithium ion conductivity). The non-aqueous electrolyte may be a liquid electrolyte (electrolyte solution) or a solid electrolyte.

The liquid electrolyte (electrolyte solution) includes, for example, a non-aqueous solvent and an electrolyte salt dissolved therein. Examples of the non-aqueous solvent include esters, ethers, nitriles such as acetonitrile, amides such as dimethylformamide, and mixed solvents composed of two or more kinds thereof. The non-aqueous solvent may contain halogen-substituted derivatives in which at least some of the hydrogen atoms in the solvent molecules are replaced with halogen atoms such as fluorine. Examples of the halogen-substituted derivatives include fluorinated cyclic carbonate esters such as fluoroethylene carbonate (FEC), fluorinated linear carbonate esters, and fluorinated linear carboxylic acid esters such as methyl fluoro-propionate (FMP).

Examples of the esters include cyclic carbonate esters such as ethylene carbonate (EC), propylene carbonate (PC), and butylene carbonate; linear carbonate esters such as dimethyl carbonate (DMC), ethyl methyl carbonate (EMC), diethyl carbonate (DEC), methyl propyl carbonate, ethyl propyl carbonate, and methyl isopropyl carbonate; cyclic

carboxylic acid esters such as γ-butyrolactone (GBL) and γ-valerolactone (GVL); and linear carboxylic acid esters such as methyl acetate, ethyl acetate, propyl acetate, methyl propionate (MP), and ethyl propionate (EP).

Examples of the ethers include cyclic ethers such as 1,3-dioxolane, 4-methyl-1,3-dioxolane, tetrahydrofuran, 2-methyltetrahydrofuran, propylene oxide, 1,2-butylene oxide, 1,3-dioxane, 1,4-dioxane, 1,3,5-trioxane, furan, 2-methylfuran, 1,8-cineole, and crown ethers; and linear ethers such as 1,2-dimethoxyethane, diethyl ether, dipropyl ether, diisopropyl ether, dibutyl ether, dihexyl ether, ethyl vinyl ether, butyl vinyl ether, methyl phenyl ether, ethyl phenyl ether, butyl phenyl ether, pentyl phenyl ether, methoxytoluene, benzyl ethyl ether, diphenyl ether, dibenzyl ether, o-dimethoxybenzene, 1,2-diethoxyethane, 1,2-dibutoxyethane, diethylene glycol dimethyl ether, diethylene glycol diethyl ether, diethylene glycol dibutyl ether, 1,1-dimethoxymethane, 1,1-diethoxyethane, triethylene glycol dimethyl ether, and tetraethylene glycol dimethyl ether.

The electrolyte salt is preferably a lithium salt. Examples of lithium salts include $LiClO_4$, $LiBF_4$, $LiPF_6$, $LiAlC_4$, $LiSbF_6$, LiSCN, $LiCF_3SO_3$, $LiCF_3CO_2$, $LiAsF_6$, $LiB_{10}Cl_{10}$, lower aliphatic carboxylic acid lithium salts, LiCl, LiBr, LiI, phosphate salts, borate salts, and imide salts. Examples of phosphate salts include lithium difluorophosphate ($LiPO_2F_2$), lithium difluoro bis(oxalato)phosphate (LiDFBOP), and lithium tetrafluoro(oxalato)phosphate. Examples of borate salts include lithium bis(oxalato)borate (LiBOB) and lithium difluoro(oxalato)borate (LiDFOB). Examples of imide salts include lithium bis(fluorosulfonyl)imide ($LiN(FSO_2)_2$), lithium bis(trifluoromethanesulfonyl)imide ($LiN(CF_3SO_2)_2$), lithium trifluoromethanesulfonyl nonafluorobutanesulfonyl imide ($LiN(CF_3SO_2)(C_4F_9SO_2)$), and lithium bis(pentafluoroethanesulfonyl) imide ($LiN(C_2F_5SO_2)_2$). Among these, $LiPF_6$ is preferably used from the standpoint of ionic conductivity and electrochemical stability. The concentration of the lithium salt may be, for example, less than or equal to 4 mol per liter of non-aqueous solvent, preferably less than or equal to 3 mol, more preferably less than or equal to 1.8 mol, and even more preferably greater than or equal to 0.8 and less than or equal to 1.8 mol.

The non-aqueous electrolyte may include an additive. Examples of additives include unsaturated carbonate esters, acid anhydrides, phenolic compounds, benzene compounds, nitrile compounds, isocyanate compounds, sultone compounds, sulfate compounds, borate ester compounds, phosphate ester compounds, and phosphite ester compounds.

Examples of unsaturated cyclic carbonate esters include vinylene carbonate, 4-methylvinylene carbonate, 4,5-dimethylvinylene carbonate, 4-ethylvinylene carbonate, 4,5-diethylvinylene carbonate, 4-propylvinylene carbonate, 4,5-dipropylvinylene carbonate, 4-phenylvinylene carbonate, 4,5-diphenylvinylene carbonate, vinyl ethylene carbonate, and divinyl ethylene carbonate. The unsaturated cyclic carbonate ester may be used singly or in combination with two or more kinds thereof. The unsaturated cyclic carbonate ester may have a portion of its hydrogen atoms substituted with fluorine atoms. The acid anhydride may be an anhydride formed by intermolecular condensation of multiple carboxylic acid molecules, but is preferably an acid anhydride of a polycarboxylic acid. Examples of polycarboxylic acid anhydrides include succinic anhydride, maleic anhydride, and phthalic anhydride.

Examples of the phenolic compounds include phenol and hydroxytoluene. Examples of benzene compounds include fluorobenzene, hexafluorobenzene, and cyclohexylbenzene (CHB).

Examples of the nitrile compounds include adiponitrile, pimelonitrile, propionitrile, and succinonitrile. Examples of the isocyanate compounds include methyl isocyanate (MIC), diphenylmethane diisocyanate (MDI), hexamethylene diisocyanate (HDI), toluene diisocyanate (TDI), isophorone diisocyanate (IPDI), and bis(isocyanatomethyl)cyclohexane (BIMCH). Examples of the sultone compounds include propane sultone and propene sultone. Examples of the sulfate compounds include ethylene sulfate, ethylene sulfite, dimethyl sulfate, and lithium fluorosulfate. Examples of the borate ester compounds include trimethyl borate and tris(trimethylsilyl)borate. Examples of the phosphate ester compounds include trimethyl phosphate and tris(trimethylsilyl)phosphate. Examples of the phosphite ester compounds include trimethyl phosphite and tris(trimethylsilyl)phosphite.

As the solid electrolyte, for example, a solid or gel-type polymer electrolyte or an inorganic solid electrolyte may be used. As the inorganic solid electrolyte, materials known for use in all-solid-state lithium-ion secondary batteries, such as oxide-based solid electrolytes, sulfide-based solid electrolytes, and halide-based solid electrolytes, may be used. The polymer electrolyte includes, for example, a lithium salt and a matrix polymer, or a non-aqueous solvent, a lithium salt, and a matrix polymer. As the matrix polymer, polymer materials capable of absorbing the non-aqueous solvent and forming a gel may be used. Examples of the polymer materials include fluororesins, acrylic resins, and polyether resins.

## EXAMPLES

Hereinafter, the present disclosure will be described in more detail with reference to Examples, but the present disclosure is not limited to these Examples.

<Example 1>

[Production of Positive Electrode Active Material]

A composite hydroxide represented by $[Ni_{0.90}Co_{0.05}Al_{0.05}](OH)_2$ obtained by a coprecipitation method was fired at 500°C for 8 hours to obtain a metal oxide including Ni, Co, and Al. Then, lithium hydroxide monohydrate ($LiOH \cdot H_2O$) was mixed so that the molar ratio of Li to the total amount of Ni, Co, and Al was 1:1.03 to obtain a mixture. Then, the mixture was heated from room temperature to 650°C at a temperature rising rate of 2.0°C/min and then from 650°C to 740°C at a temperature rising rate of 0.5°C/min under an oxygen stream at an oxygen concentration of 95% (flow rate of 2 mL/min per 10 $cm^3$ and 5L/min per kg of mixture), and a lithium-containing transition metal composite oxide was obtained (synthesis step).

Water was added to the obtained lithium-containing transition metal composite oxide so that the slurry concentration was 1500 g/L, and the mixture was stirred for 15 minutes and filtered to obtain a cake-like composition (washing step). Thereafter, powdered lithium methanesulfonate was added to the obtained cake-like composition (addition step). Then, the obtained cake-like composition was dried under a vacuum atmosphere at 180°C for 2 hours to obtain a powder-like composition (drying step). The amount of lithium methanesulfonate added was 0.1 mass% relative to the total mass of the lithium-containing transition metal composite oxide. It was confirmed by Fourier transform infrared spectroscopy (FT-IR) that lithium methanesulfonate was present on the surfaces of the secondary particles of the lithium-containing transition metal composite oxide. The amount of alkali component in the positive electrode active material determined by the above-described method was 50 μmol/g.

[Production of Positive Electrode]

The positive electrode of Example 1 was prepared through a process (dry process) in which the positive electrode active material particles and binder particles were mixed without using a solvent. More specifically, lithium-containing transition metal composite oxide, acetylene black (AB), and PTFE particles were charged into a mixer ("Wonder Crusher" manufactured by Osaka Chemical Co., Ltd.) at a mass ratio of 100:1:2, and subjected to mixing treatment at room temperature for 5 minutes at a rotation speed corresponding to memory setting 3 (mixing step). Note that the maximum rotation speed of the Wonder Crusher at memory setting 10 is 28,000 rpm. Through this mixing process, positive electrode mixture particles were obtained in which positive electrode active material and PTFE were uniformly dispersed. The resulting positive electrode mixture had a solid content concentration of 100%.

The obtained positive electrode mixture particles were passed five times between a pair of rolls to knead and simultaneously stretch them, thereby preparing a positive electrode mixture sheet (stretching step). The peripheral speed ratio of the pair of rolls was set to 1:3, and the thickness of the positive electrode mixture sheet was adjusted to about 100 μm. Subsequently, the resulting positive electrode mixture sheet was disposed on the surface of the positive electrode core, and the laminate of the mixture sheet and the positive electrode core was pressed using two rolls (line pressure: 1.0 t/cm) to obtain the positive electrode (laminating step). Note that an aluminum alloy foil was used as the positive electrode core.

With respect to the prepared positive electrode, when the positive electrode mixture layer is divided into three equal parts in the thickness direction to form a first region, a second region, and a third region from the positive electrode core side, the transition metal amount and the fluorine (F) amount were measured by energy-dispersive XRD (EDS). Based on the ratio of fluorine amount to transition metal amount, the content (s) of PTFE in the first region, the content (t) of PTFE in the second region, and the content (u) of PTFE in the third region were each calculated. In the positive electrode of Example 1, s, t, and u were 32%, 33%, and 35%, respectively, and (u - s)/(s + t + u) was 3%.

[Preparation of Non-Aqueous Electrolyte]

Ethylene carbonate (EC), ethyl methyl carbonate (EMC), and dimethyl carbonate (DMC) were mixed at a volume ratio of 3:3:4. Lithium hexafluorophosphate ($LiPF_6$) was then dissolved in the resulting mixed solvent so that the concentration was 1.2 mol/L to prepare a non-aqueous electrolyte.

[Production of Test Cell]

A positive electrode lead was attached to the exposed portion of the positive electrode, a negative electrode lead was attached to lithium metal foil as a negative electrode, and the positive electrode and the negative electrode were spirally wound via a separator made of a polyolefin to produce a wound electrode assembly. This electrode assembly was housed in an outer case composed of an aluminum laminate sheet, the non-aqueous electrolyte was injected therein, and then an opening portion of the outer case was sealed to obtain a test cell.

[Evaluation of Output Characteristics]

The test cell was charged at a constant current of 0.2 C under a temperature environment of 25°C until the battery voltage reached 4.3 V (vs. Li) and charged at a constant voltage of 4.3 V until the current value reached 0.02 C. After a pause of 1 hour, the test cell was discharged to 2.5 V at a constant current of 0.2 C, thereby completing the initial charge-discharge cycle. Next, the test cell was again charged at a constant current of 0.2 C until the battery voltage reached 4.3 V, charged at a constant voltage of 4.3 V until the current value reached 0.02 C, and after a pause of 1 hour, discharged to 2.5 V at 1 C and then to 2.5 V at 0.01 C. The initial output was determined using the following equation.

Initial output = 1 C discharge capacity/(1 C discharge capacity + 0.01 C discharge capacity)

[Evaluation of Cycle Characteristics]

The test cell was charged to 4.3 V (vs. Li) at a constant current of 0.2 C under a temperature environment of 25°C and then charged to 0.02 C at a constant voltage of 4.3 V. Thereafter, the test cell was discharged to 2.5 V at a constant current of 0.2 C. This charge- discharge operation was defined as one cycle, which was repeated for 30 cycles, and the capacity retention rate was determined using the following equation.

Capacity retention rate = (discharge capacity at 30th cycle/discharge capacity at 1st cycle) $\times$ 100

[Evaluation of Amount of Gas Generated]

The test cell was charged to 4.3 V (vs. Li) at a constant current of 0.2 C under a temperature environment of 25°C and then charged at a constant voltage of 4.3 V until the current value was equivalent to 0.01 C to complete the charging. After a pause of 10 minutes, the test cell was discharged to 2.5 V at a constant current of 0.1 C. After two cycles of charging and discharging, the volume of the test cell in which only charging was performed for one cycle was measured by the buoyancy method (Archimedes method). The pause between cycles was 10 minutes. The charged test cell was stored in a thermostatic bath at 85°C for 3 hours. After the stored test cell was cooled to room temperature, the volume was measured again by the buoyancy method. The difference between the volume before storage and the volume after storage was defined as the amount of gas generated and standardized per gram of positive electrode active material.

<Example 2>

A test cell was produced and evaluated in the same manner as in Example 1, except that the amount of lithium methanesulfonate added relative to the total mass of the lithium-containing transition metal composite oxide was adjusted to 0.5 mass% in the addition step of producing the positive electrode active material.

<Example 3>

A test cell was produced and evaluated in the same manner as in Example 1, except that the amount of lithium methanesulfonate added relative to the total mass of the lithium-containing transition metal composite oxide was adjusted to 1.0 mass% in the addition step of producing the positive electrode active material.

<Example 4>

A test cell was produced and evaluated in the same manner as in Example 1, except that in the addition step of producing the positive electrode active material, a lithium methanesulfonate solution obtained by dissolving lithium methanesulfonate in pure water was added instead of powdered lithium methanesulfonate, and the amount of lithium methanesulfonate added relative to the total mass of the lithium-containing transition metal composite oxide was adjusted to 0.5 mass%. Note that the concentration of the lithium methanesulfonate solution added was 10 mass%, and the lithium methanesulfonate solution was added so that the amount of lithium methanesulfonate added would correspond to the above.

<Example 5>

A test cell was produced and evaluated in the same manner as in Example 1, except that in the addition step of producing the positive electrode active material, a diluted solution of methanesulfonic acid was added instead of powdered lithium methanesulfonate, and the amount of methanesulfonic acid added relative to the total mass of the lithium-containing transition metal composite oxide was adjusted to 0.5 mass%. Note that the concentration of the methanesulfonic acid solution added was 10 mass%, and the methanesulfonic acid solution was added so that the amount of methanesulfonic acid would correspond to the above.

<Example 6>

A test cell was produced and evaluated in the same manner as in Example 1, except that in the addition step of producing the positive electrode active material, a solution including methanesulfonic acid and LiOH (hereinafter, referred to as a methanesulfonic acid + LiOH solution), in which methanesulfonic acid and LiOH were dissolved in pure water at a molar ratio of 1:0.5, was added instead of powdered lithium methanesulfonate, and the amount of lithium methanesulfonate added relative to the total mass of lithium-containing transition metal composite oxide was adjusted to 0.5 mass%. Note that the concentration of the methanesulfonic acid + LiOH solution added was 10 mass%, and the methanesulfonic acid + LiOH solution was added so that the amount of lithium methanesulfonic added would correspond to the above.

<Example 7>

A test cell was produced and evaluated in the same manner as in Example 1, except that in the addition step of producing the positive electrode active material, a methanesulfonic acid + LiOH solution obtained by dissolving methanesulfonic acid and LiOH in pure water at a molar ratio of 1:1, was added instead of powdered lithium methanesulfonate, and the amount of lithium methanesulfonate added relative to the total mass of lithium-containing transition metal composite oxide was adjusted to 0.5 mass%. Note that the concentration of the methanesulfonic acid + LiOH solution added was 10 mass%, and the methanesulfonic acid + LiOH solution was added so that the amount of lithium methanesulfonic added would correspond to the above.

<Example 8>

A test cell was produced and evaluated in the same manner as in Example 1, except that in the addition step of producing the positive electrode active material, a lithium ethanesulfonate solution obtained by dissolving lithium ethanesulfonate in pure water was added instead of powdered lithium methanesulfonate, and the amount of lithium ethanesulfonate added relative to the total mass of the lithium-containing transition metal composite oxide was adjusted to 0.5 mass%. Note that the concentration of the lithium ethanesulfonate solution added was 10 mass%, and the lithium ethanesulfonate solution was added so that the amount of lithium ethanesulfonate added would correspond to the above. It was confirmed by Fourier transform infrared spectroscopy (FT-IR) that lithium ethanesulfonate was present on the surface of the positive electrode active material.

<Example 9>

A test cell was produced and evaluated in the same manner as in Example 1, except that in the addition step of producing the positive electrode active material, a sodium methanesulfonate solution obtained by dissolving sodium methanesulfonate in pure water was added instead of powdered lithium methanesulfonate, and the amount of sodium methanesulfonate added relative to the total mass of the sodium-containing composite oxide was adjusted to 0.5 mass%. Note that the concentration of the sodium methanesulfonate solution added was 10 mass%, and the sodium methanesulfonate solution was added so that the amount of sodium methanesulfonate would correspond to the above. It was confirmed by Fourier transform infrared spectroscopy (FT-IR) that sodium methanesulfonate was present on the surface of the positive electrode active material.

<Example 10>

A test cell was produced and evaluated in the same manner as in Example 4, except that in the production of the positive electrode active material, the washing step was omitted and the amount of lithium methanesulfonate added relative to the total mass of the lithium-containing transition metal composite oxide was adjusted to 0.1 mass% in the addition step. Note that the amount of alkali component in the positive electrode active material was 300 μmol/g.

<Example 11>

A test cell was produced and evaluated in the same manner as in Example 4, except that in the production of the positive electrode active material, the washing step was omitted and the amount of lithium methanesulfonate added relative to the total mass of the lithium-containing transition metal composite oxide was adjusted to 0.5 mass% in the

addition step. Note that the amount of alkali component in the positive electrode active material was 200 μmol/g.

<Comparative Example 1>

In the production of the positive electrode active material, addition step was omitted. In the production of the positive electrode, instead of the above-described dry process, a wet process was employed in which the positive electrode active material particles and binder particles were mixed using a solvent to produce the positive electrode. More specifically, in the production of the positive electrode, acetylene black (AB), and polyvinylidene fluoride were mixed at a mass ratio of 92:5:3, and N-methyl-2-pyrrolidone (NMP) was used as a dispersion medium to prepare a positive electrode mixture slurry. Then, a positive electrode core made of aluminum foil was coated with the positive electrode mixture slurry, the coating was dried and compressed, and then the positive electrode core was cut into a predetermined electrode size to obtain a positive electrode in which a positive electrode mixture layer was disposed on both the surfaces of the positive electrode core. In the other steps, a test cell was produced and evaluated in the same manner as in Example 1.

<Comparative Example 2>

A test cell was produced and evaluated in the same manner as in Example 1, except that the amount of lithium methanesulfonate added relative to the total mass of the lithium-containing transition metal composite oxide was adjusted to 0.5 mass% in the addition step of producing the positive electrode active material, and in the production of the positive electrode, the positive electrode was produced through a wet process instead of a dry process. More specifically, in the production of the positive electrode, acetylene black (AB), and polyvinylidene fluoride were mixed at a mass ratio of 92:5:3, and N-methyl-2-pyrrolidone (NMP) was used as a dispersion medium to prepare a positive electrode mixture slurry. Then, a positive electrode core made of aluminum foil was coated with the positive electrode mixture slurry, the coating was dried and compressed, and then the positive electrode core was cut into a predetermined electrode size to obtain a positive electrode in which a positive electrode mixture layer was disposed on both the surfaces of the positive electrode core.

<Comparative Example 3>

A test cell was produced and evaluated in the same manner as in Example 1, except that the addition step was omitted in the production of the positive electrode active material.

<Comparative Example 4>

A test cell was produced and evaluated in the same manner as in Example 1, except that the addition step was omitted in the production of the positive electrode active material.

<Comparative Example 5>

A test cell was produced and evaluated in the same manner as in Example 4, except that in the addition step of producing the positive electrode active material, 10 mass% lithium succinate solution was added instead of the methanesulfonic acid solution, and the amount of lithium succinate added relative to the total mass of the lithium-containing transition metal composite oxide was adjusted to 0.5 mass%.

<Comparative Example 6>

A test cell was produced and evaluated in the same manner as in Example 4, except that in the addition step of producing the positive electrode active material, 10 mass% lithium oxalate solution was added instead of the methanesulfonic acid solution, and the amount of lithium oxalate added relative to the total mass of the lithium-containing transition metal composite oxide was adjusted to 0.5 mass%.

Table 1 shows the initial output, capacity retention rate, and gas increase amount of the test cells in Examples 1 to 11 and Comparative Examples 1 to 6. Table 1 also shows the presence or absence of a washing step in the production of the positive electrode active material, the compound added, the addition method, the addition amount, the alkali amount in the positive electrode active material, the coating method of the positive electrode, and the content (s, t, u) of PTFE in the first, second, and third regions of the positive electrode mixture layer. The initial output, the capacity retention rate, and the gas increase amount of the test cells in Examples 1 to 11 and Comparative Examples 1 to 6 shown in Table 1 were expressed relatively, taking the initial output, capacity retention rate, and gas increase amount of the test cell in Comparative Example 1 as 100. A larger value of the initial output means better output characteristics, and a larger value of the capacity retention rate means better cycle characteristics during high-rate charging.

[Table 1]

| | Washing step | Sulfonate compound | | | Alkali Amount [μmol/g] | Coating method | Content of PTFE | | | | Evaluation result | | |
|---|---|---|---|---|---|---|---|---|---|---|---|---|---|
| | | Additive compound | Addition method | Addition amount (mass%) | | | First region (s) [%] | Second region (t) [%] | Third region (u) [%] | (u-s) /(s+t+u) [%] | Initial output | Capacity retention rate | Gas increase amount |
| Example 1 | Yes | Lithium methanesulfonate | Powder addition | 0.1 | 50 | Dry | 32 | 33 | 35 | 3 | 101.5 | 106 | 96 |
| Example 2 | Yes | Lithium methanesulfonate | Powder addition | 0.5 | 60 | Dry | 34 | 35 | 31 | 3 | 104.2 | 105 | 90 |
| Example 3 | Yes | Lithium methanesulfonate | Powder addition | 1.0 | 70 | Dry | 33 | 32 | 35 | 2 | 102.8 | 103 | 87 |
| Example 4 | Yes | Lithium methanesulfonate | Solution addition | 0.5 | 60 | Dry | 34 | 33 | 33 | 1 | 105.0 | 104 | 89 |
| Example 5 | Yes | Methanesulfonic acid | Solution addition | 0.5 | 50 | Dry | 36 | 34 | 30 | 6 | 102.3 | 103 | 90 |
| Example 6 | Yes | Methanesulfonic acid + LiOH (Li/methanesulfonic acid =0.5) | Solution addition | 0.5 | 55 | Dry | 33 | 35 | 32 | 1 | 103.4 | 103 | 91 |
| Example 7 | Yes | Methanesulfonic acid + LiOH (Li/methanesulfonic acid = 1.0) | Solution addition | 0.5 | 60 | Dry | 32 | 33 | 35 | 3 | 104.9 | 104 | 89 |
| Example 8 | Yes | Lithium ethanesulfonate | Solution addition | 0.5 | 50 | Dry | 36 | 34 | 30 | 6 | 102.0 | 102 | 93 |
| Example 9 | Yes | Sodium methanesulfonate | Solution addition | 0.5 | 50 | Dry | 36 | 34 | 30 | 6 | 101.5 | 102 | 91 |
| Example 10 | No | Lithium methanesulfonate | Solution addition | 0.1 | 300 | Dry | 34 | 33 | 33 | 1 | 106.7 | 105 | 300 |
| Example 11 | No | Lithitun methanesulfonate | Solution addition | 0.5 | 200 | Dry | 33 | 33 | 34 | 1 | 106.7 | 104 | 270 |
| Comparative Example 1 | Yes | - | - | - | 50 | Wet | 26 | 33 | 41 | 15 | 100 | 100 | 100 |

(continued)

| | Washing step | Sulfonate compound | | | Alkali Amount [μmol/g] | Coating method | Content of PTFE | | | | Evaluation result | | |
|---|---|---|---|---|---|---|---|---|---|---|---|---|---|
| | | Additive compound | Addition method | Addition amount (mass%) | | | First region (s) [%] | Second region (t) [%] | Third region (u) [%] | (u-s) /(s+t+u) [%] | Initial output | Capacity retention rate | Gas increase amount |
| Comparative Example 2 | Yes | Lithium methanesulfonate | Powder addition | 0.5 | 60 | Wet | 27 | 33 | 40 | 13 | 105.2 | 97 | 90 |
| Comparative Example 3 | Yes | - | - | - | 50 | Dry | 34 | 33 | 33 | 1 | 100 | 107 | 100 |
| Comparative Example 4 | Yes | - | - | - | 50 | Dry | 34 | 35 | 31 | 3 | 100 | 105 | 100 |
| Comparative Example 5 | Yes | Li succinate | Solution addition | 0.5 | 50 | Dry | 33 | 34 | 33 | 0 | 98.4 | 101 | 97 |
| Comparative Example 6 | Yes | Li oxalate | Solution addition | 0.5 | 50 | Dry | 34 | 33 | 33 | 1 | 98.2 | 101 | 98 |

As shown in Table 1, the test cells in Examples has improved initial output while maintaining the capacity retention rate as compared with the test cells in Comparative Examples. That is, when the sulfonate compound is present on the surfaces of the secondary particles and the distribution of the content of PTFE in the positive electrode mixture layer satisfies $(u - s)/(s + t + u) \leq \pm 10\%$, it is possible to provide a non-aqueous electrolyte secondary battery having improved cycle characteristics and output characteristics.

On the other hand, the test cell in Comparative Example 2, in which the positive electrode was produced through a wet process while lithium sulfonate was present on the surfaces of the secondary particles, and the distribution of the content of PTFE was $(u - s)/(s + t + u) > \pm 10\%$, had an improved initial output but a worse capacity retention rate as compared with the test cell in Comparative Example 1, presumably because simply allowing lithium sulfonate to be present on the surfaces of the secondary particles did not improve the diffusivity of the non-aqueous electrolyte in the positive electrode mixture layer and caused a distribution of reactions in the thickness direction of the positive electrode mixture layer.

In addition, the test cells in Comparative Examples 3 and 4, in which the positive electrode was produced through a dry process and the distribution of the content of PTFE was satisfied as $(u - s)/(s + t + u) \leq \pm 10\%$, but no lithium sulfonate was present on the surfaces of the secondary particles, had an improved capacity retention rate but no improved initial output as compared with the test cell in Comparative Example 1. The test cells in Comparative Examples 5 and 6, in which lithium succinate or lithium oxalate was present on the surfaces of the secondary particles instead of lithium sulfonate, had an improved capacity retention rate but no improved initial output as compared with the test cell in Comparative Example 1.

<Example 12>

A test cell was produced and evaluated in the same manner as in Example 1, except that the composition of the composite hydroxide was changed to $[Ni_{0.90}Mn_{0.10}](OH)_2$ in the synthesis step of producing the positive electrode active material, and the amount of lithium methanesulfonate added relative to the total mass of the lithium-containing transition metal composite oxide was adjusted to 0.5 mass% in the addition step.

<Example 13>

A test cell was produced and evaluated in the same manner as in Example 1, except that the composition of the composite hydroxide was changed to $[Ni_{0.90}Mn_{0.10}](OH)_2$ in the synthesis step of producing the positive electrode active material, and the amount of lithium methanesulfonate added relative to the total mass of the lithium-containing transition metal composite oxide was adjusted to 0.5 mass% in the addition step.

<Comparative Example 7>

A test cell was produced and evaluated in the same manner as in Comparative Example 1, except that the composition of the composite hydroxide was changed to $[Ni_{0.90}Mn_{0.10}](OH)_2$ in the synthesis step of producing the positive electrode active material.

<Comparative Example 8>

A test cell was produced and evaluated in the same manner as in Comparative Example 1, except that the composition of the composite hydroxide was changed to $[Ni_{0.90}Mn_{0.10}](OH)_2$ in the synthesis step of producing the positive electrode active material, and the amount of lithium methanesulfonate added relative to the total mass of the lithium-containing transition metal composite oxide was adjusted to 0.5 mass% in the addition step of producing the positive electrode active material.

<Comparative Example 9>

A test cell was produced and evaluated in the same manner as in Example 1, except that in the synthesis step of producing the positive electrode active material, the composition of the composite hydroxide was changed to $[Ni_{0.90}Mn_{0.10}](OH)_2$, and the addition step was omitted.

Table 2 shows the initial output, capacity retention rate, and gas increase amount of the test cells in Examples 12 and 13 and Comparative Examples 7 to 9. Table 2 also shows the presence or absence of a washing step in the production of the positive electrode active material, the compound added, the addition method, the addition amount, the alkali amount in the positive electrode active material, the coating method of the positive electrode, and the content (s, t, u) of PTFE in the first, second, and third regions of the positive electrode mixture layer. The initial output, the capacity retention rate, and the gas increase amount of the test cells in Examples 12 and 13 and Comparative Examples 7 to 9 shown in Table 2 were

expressed relatively, taking the initial output, capacity retention rate, and gas increase amount of the test cell in Comparative Example 7 as 100.

[Table 2]

| | Washing step | Sulfonate compound | | | Alkali Amount [µmol/g] | Coating method | Content of PTFE | | | | Eva luation res ult | | |
|---|---|---|---|---|---|---|---|---|---|---|---|---|---|
| | | Additive compound | Addition method | Addition amount (mass%) | | | First region (s) [%] | Second region (t) [%] | Third region (u) [%] | (u-s) /(s+t+u) [%] | Initial output | Capacity y retention rate | Gas increase amount |
| Example 12 | Yes | Lithium methanesulfonate | Powder addition | 0.5 | 130 | Dry | 33 | 35 | 32 | 1 | 102.7 | 103 | 97 |
| Example 13 | Yes | Lithium methanesulfonate | Powder addition | 0.5 | 100 | Dry | 34 | 35 | 31 | 3 | 102.2 | 103 | 93 |
| Comparative Example 7 | Yes | - | - | - | 90 | Wet | 25 | 33 | 42 | 17 | 100 | 100 | 100 |
| Comparative Example 8 | Yes | Lithium methanesulfonate | Powder addition | 0.5 | 95 | Wet | 25 | 33 | 42 | 17 | 103.3 | 98 | 93 |
| Comparative Example 9 | Yes | - | - | - | 85 | Dry | 34 | 33 | 33 | 1 | 100 | 104 | 100 |

As shown in Table 2, the test cells in Examples has improved initial output while maintaining the capacity retention rate as compared with the test cells in Comparative Examples. That is, when the sulfonate compound is present on the surfaces of the secondary particles and the distribution of the content of PTFE in the positive electrode mixture layer satisfies $(u - s)/(s + t + u) \leq \pm 10\%$, it is possible to provide a non-aqueous electrolyte secondary battery having improved output characteristics while maintaining cycle characteristics.

The present disclosure will be further described with reference to embodiments below.

Constitution 1: A positive electrode for a non-aqueous electrolyte secondary battery, having:

a positive electrode core; and
a positive electrode mixture layer formed on a surface of the positive electrode core, wherein
the positive electrode mixture layer includes a positive electrode active material and PTFE,
the positive electrode active material includes a lithium-containing transition metal composite oxide having a layered structure,
the lithium-containing transition metal composite oxide is represented by the general formula $Li_xNi_aCo_bMn_cM_dO_{2-y}$, wherein $0.80 < x < 1.2$, $0.75 \leq a \leq 0.95$, $0 \leq b \leq 0.15$, $0 \leq c \leq 0.25$, $0 \leq d \leq 0.10$, $0 \leq y < 0.05$, $a + b + c + d = 1$, and M represents at least one element selected from the group consisting of W, Mg, Mo, Nb, Ti, Si, Al, and Zr, and is composed of secondary particles each formed by aggregation of primary particles,
a sulfonate compound represented by formula (1) is present on surfaces of the secondary particles, and
when the positive electrode mixture layer is divided into three equal parts in a thickness direction to form a first region, a second region, and a third region in order from a positive electrode core side, a content (s) of PTFE in the first region, a content (t) of PTFE in the second region, and a content (u) of PTFE in the third region satisfy $(u - s)/(s + t + u) \leq \pm 10\%$,

[Formula 3]

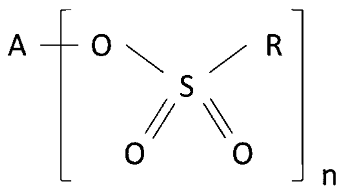

(I)

wherein A represents a group I or group II element, R represents a hydrocarbon group, and n represents 1 or 2.

Constitution 2: The positive electrode for a non-aqueous electrolyte secondary battery according to Constitution 1, wherein the positive electrode active material has an alkali amount of less than or equal to 150 μmol/g as measured by Warder method.
Constitution 3: The positive electrode for a non-aqueous electrolyte secondary battery according to Constitution 1 or 2, wherein the PTFE includes fibrous particles having an aspect ratio of greater than or equal to 1.5 in a proportion of greater than or equal to 20% relative to total particles, and an average major axis size of the fibrous particles is greater than or equal to 1 μm and less than or equal to 20 μm.
Constitution 4: The positive electrode for a non-aqueous electrolyte secondary battery according to any one of Constitutions 1 to 3, wherein the positive electrode active material includes a coated positive electrode active material having a conductive agent attached to surfaces of the secondary particles, and a coverage of the surface of the coated positive electrode active material with the conductive agent is greater than or equal to 10% and less than or equal to 60%.
Constitution 5: The positive electrode for a non-aqueous electrolyte secondary battery according to Constitution 4, wherein the coated positive electrode active material has irregularities on the surfaces thereof, and the conductive agent enters and adheres to a depression of the irregularities.
Constitution 6: The positive electrode for a non-aqueous electrolyte secondary battery according to any one of Constitutions 1 to 5, wherein the positive electrode mixture layer has a mixture resistance of less than or equal to 20 Ωcm.
Constitution 7: The positive electrode for a non-aqueous electrolyte secondary battery according to any one of Constitutions 1 to 6, wherein A represents a group I element.
Constitution 8: The positive electrode for a non-aqueous electrolyte secondary battery according to any one of Constitutions 1 to 7, wherein A represents Li.

Constitution 9: The positive electrode for a non-aqueous electrolyte secondary battery according to any one of Constitutions 1 to 8, wherein R represents an alkyl group.

Constitution 10: The positive electrode for a non-aqueous electrolyte secondary battery according to any one of Constitutions 1 to 9, wherein R represents a methyl group.

Constitution 11: The positive electrode active material for a non-aqueous electrolyte secondary battery according to any one of Constitutions 1 to 10, wherein an amount of the sulfonate compound present on a surface of the lithium-containing transition metal composite oxide is greater than or equal to 0.1 mass% and less than or equal to 2 mass% relative to a mass of the lithium-containing transition metal composite oxide.

Constitution 12: A method for producing a positive electrode for a non-aqueous electrolyte secondary battery, the method including:

a mixing step of mixing a positive electrode active material including a lithium-containing transition metal composite oxide having a sulfonate compound represented by formula (I) on surfaces of secondary particles with PTFE to produce positive electrode mixture layer particles having a solid content concentration of substantially 100%;

a stretching step of kneading and simultaneously stretching the positive electrode mixture particles by passing the positive electrode mixture particles through a gap between a pair of rollers twice or more to produce a positive electrode mixture sheet; and

a bonding step of bonding the positive electrode mixture sheet to a core, thereby producing an electrode.

[Formula 4]

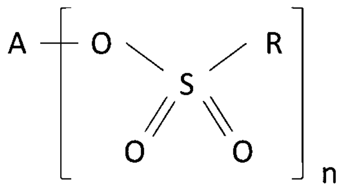

(I)

wherein A represents a group I or group II element, R represents a hydrocarbon group, and n represents 1 or 2.

REFERENCE SIGNS LIST

10 Non-aqueous electrolyte secondary battery, 11 Positive electrode, 12 Negative electrode, 13 Separator, 14 Electrode assembly, 16 Outer case, 17 Sealing assembly, 18, 19 Insulating plate, 20 Positive lead, 21 Negative lead, 22 Grooved portion, 23 Internal terminal plate, 24 Lower vent member, 25 Insulating member, 26 Upper vent member, 27 Cap, 28 Gasket, 30 Positive electrode core, 31 Positive electrode mixture layer, 32 Positive electrode mixture particle, 33 Positive electrode mixture sheet, 40 Mixer, 41, 42 Roller

## Claims

**1.** A positive electrode for a non-aqueous electrolyte secondary battery, having:

a positive electrode core; and

a positive electrode mixture layer formed on a surface of the positive electrode core, wherein

the positive electrode mixture layer includes a positive electrode active material and PTFE,

the positive electrode active material includes a lithium-containing transition metal composite oxide having a layered structure,

the lithium-containing transition metal composite oxide is represented by the general formula $Li_xNi_aCo_bMn_cM_dO_{2-y}$, wherein $0.8 < x < 1.2$, $0.75 \leq a \leq 0.95$, $0 \leq b \leq 0.15$, $0 \leq c \leq 0.25$, $0 \leq d \leq 0.10$, $0 \leq y < 0.05$, $a + b + c + d = 1$, and M represents at least one element selected from the group consisting of W, Mg, Mo, Nb, Ti, Si, Al, and Zr, and is composed of secondary particles each formed by aggregation of primary particles,

a sulfonate compound represented by formula (1) is present on surfaces of the secondary particles, and

when the positive electrode mixture layer is divided into three equal parts in a thickness direction to form a first region, a second region, and a third region in order from a positive electrode core side, a content (s) of PTFE in the first region, a content (t) of PTFE in the second region, and a content (u) of PTFE in the third region satisfy (u - s)/(s

+ t + u) ≤ ±10%,

[Formula 1]

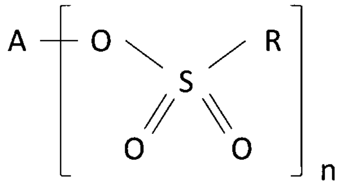

(I)

wherein A represents a group I or group II element, R represents a hydrocarbon group, and n represents 1 or 2.

2. The positive electrode for a non-aqueous electrolyte secondary battery according to claim 1, wherein the positive electrode active material has an alkali amount of less than or equal to 150 μmol/g as measured by Warder method.

3. The positive electrode for a non-aqueous electrolyte secondary battery according to claim 1, wherein the PTFE includes fibrous particles having an aspect ratio of greater than or equal to 1.5 in a proportion of greater than or equal to 20% relative to total particles, and an average major axis size of the fibrous particles is greater than or equal to 1 μm and less than or equal to 20 μm.

4. The positive electrode for a non-aqueous electrolyte secondary battery according to claim 1, wherein the positive electrode active material includes a coated positive electrode active material having a conductive agent attached to a surface thereof, and a coverage of the surface of the coated positive electrode active material with the conductive agent is greater than or equal to 10% and less than or equal to 60%.

5. The positive electrode for a non-aqueous electrolyte secondary battery according to claim 4, wherein the coated positive electrode active material has irregularities on the surfaces of the secondary particles, and the conductive agent enters and adheres to a depression of the irregularities.

6. The positive electrode for a non-aqueous electrolyte secondary battery according to claim 1, wherein the positive electrode mixture layer has a mixture resistance of less than or equal to 20 Ωcm.

7. The positive electrode for a non-aqueous electrolyte secondary battery according to claim 1, wherein A represents a group I element.

8. The positive electrode for a non-aqueous electrolyte secondary battery according to claim 1, wherein A represents Li.

9. The positive electrode for a non-aqueous electrolyte secondary battery according to claim 1, wherein R represents an alkyl group.

10. The positive electrode for a non-aqueous electrolyte secondary battery according to claim 1, wherein R represents a methyl group.

11. The positive electrode for a non-aqueous electrolyte secondary battery according to claim 1, wherein an amount of the sulfonate compound present on a surface of the lithium-containing transition metal composite oxide is greater than or equal to 0.1 mass% and less than or equal to 2 mass% relative to a mass of the lithium-containing transition metal composite oxide.

12. A method for producing a positive electrode for a non-aqueous electrolyte secondary battery, the method including:

a mixing step of mixing a positive electrode active material including a lithium-containing transition metal composite oxide having a sulfonate compound represented by formula (I) on surfaces of secondary particles with PTFE to produce positive electrode mixture layer particles having a solid content concentration of substantially 100%;
a stretching step of kneading and simultaneously stretching the positive electrode mixture particles by passing the positive electrode mixture particles through a gap between a pair of rollers twice or more to produce a positive

electrode mixture sheet; and

a bonding step of bonding the positive electrode mixture sheet to a core, thereby producing an electrode.

[Formula 2]

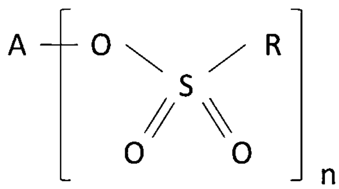

(I)

wherein A represents a group I or group II element, R represents a hydrocarbon group, and n represents 1 or 2.

Figure 1

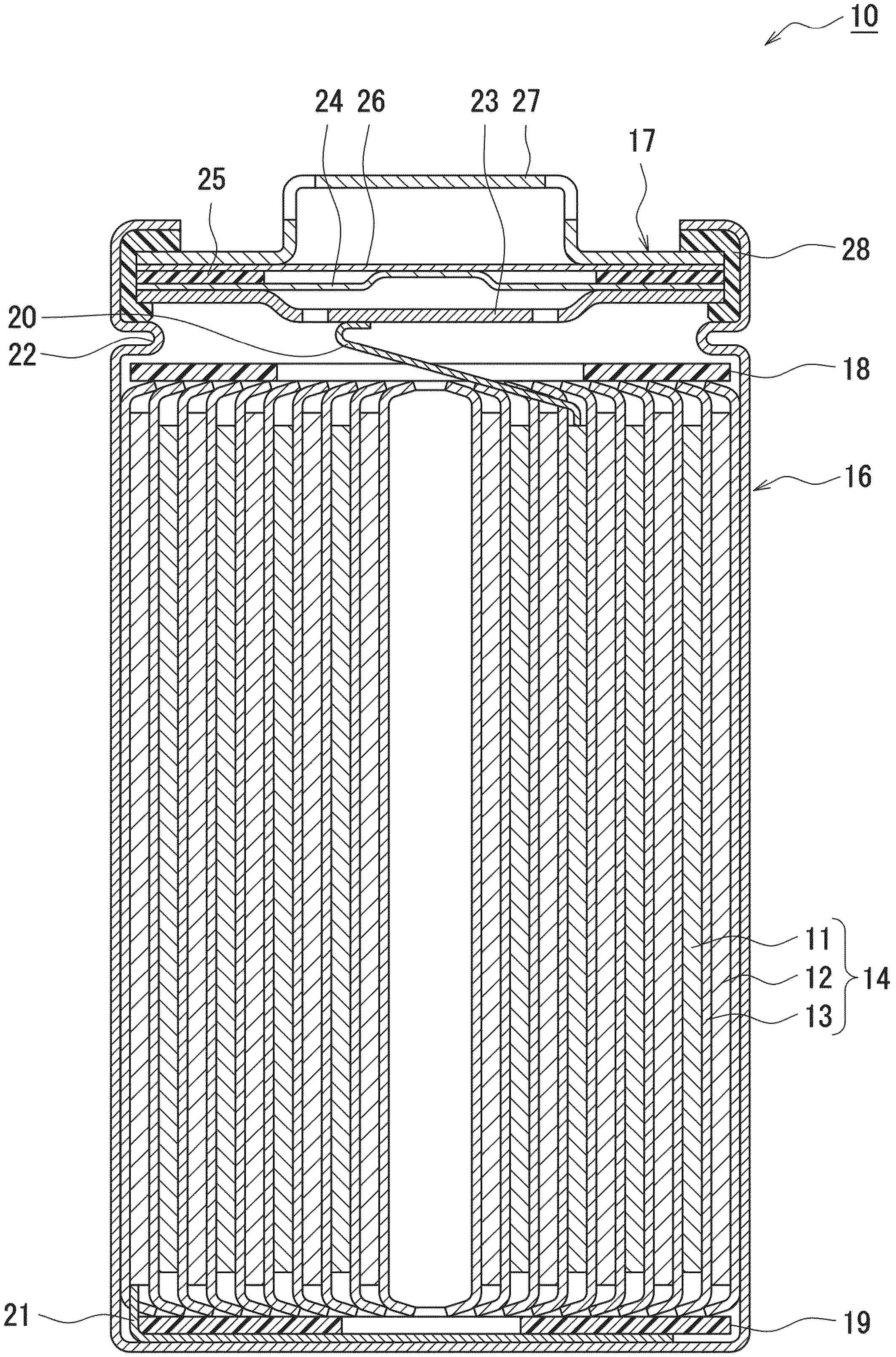

Figure 2

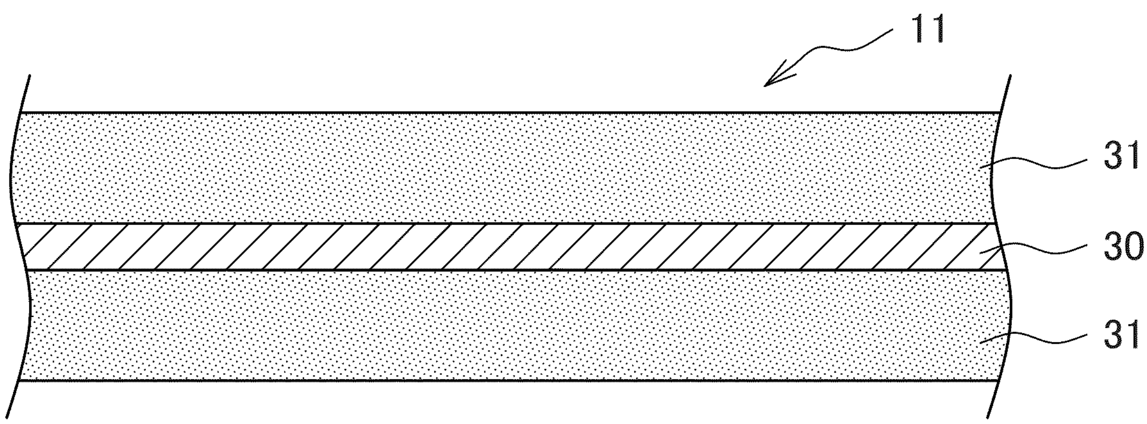

Figure 3

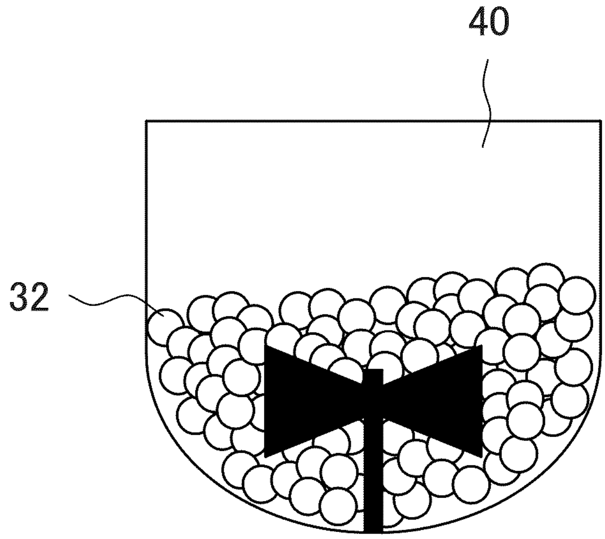


Figure 4

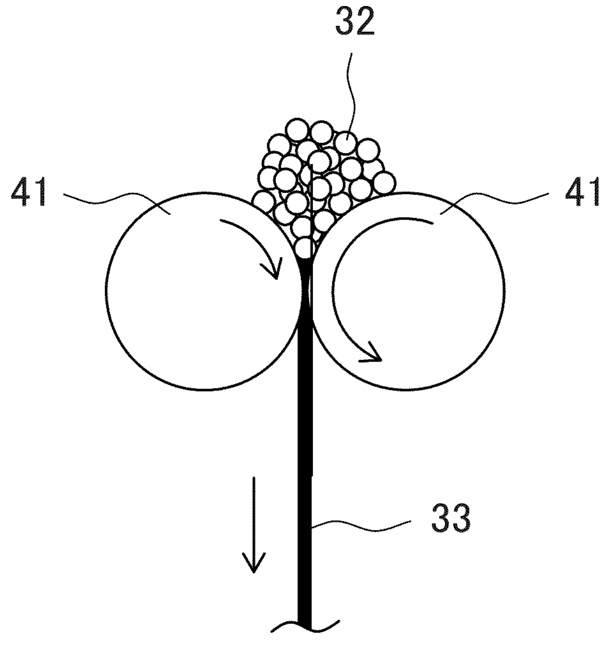

Figure 5

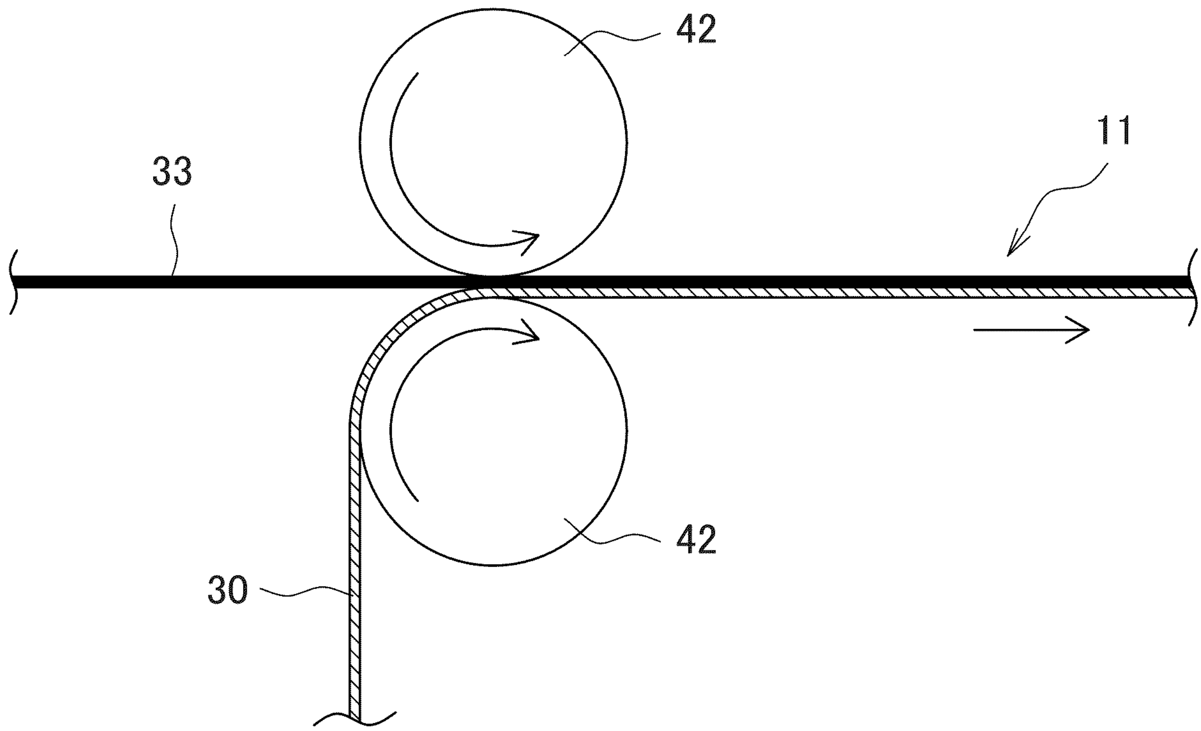

**INTERNATIONAL SEARCH REPORT**

International application No. **PCT/JP2024/013759**

**A. CLASSIFICATION OF SUBJECT MATTER**

***H01M 4/131***(2010.01)i; ***H01M 4/36***(2006.01)i; ***H01M 4/62***(2006.01)i; ***H01M 4/505***(2010.01)i; ***H01M 4/525***(2010.01)i; ***H01M 4/1391***(2010.01)i

FI: H01M4/131; H01M4/1391; H01M4/36 C; H01M4/505; H01M4/525; H01M4/62 Z

According to International Patent Classification (IPC) or to both national classification and IPC

**B. FIELDS SEARCHED**

Minimum documentation searched (classification system followed by classification symbols)

H01M4/131; H01M4/36; H01M4/62; H01M4/505; H01M4/525; H01M4/1391

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | WO 2022/113498 A1 (PANASONIC INTELLECTUAL PROPERTY MANAGEMENT CO., LTD.) 02 June 2022 (2022-06-02) paragraphs [0011]-[0025], [0044]-[0047], claims 1-8 | 1-12 |
| Y | JP 2019-169286 A (TDK CORPORATION) 03 October 2019 (2019-10-03) paragraphs [0008], [0019], [0032]-[0036], [0121] | 1-12 |
| Y | WO 2022/227494 A1 (SVOLT ENERGY TECHNOLOGY CO., LTD.) 03 November 2022 (2022-11-03) p. 1, lines 5-17 | 2 |
| Y | WO 2022/070542 A1 (PANASONIC INTELLECTUAL PROPERTY MANAGEMENT CO., LTD.) 07 April 2022 (2022-04-07) paragraphs [0011]-[0031], claims 1-4 | 3-6 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **14 June 2024** | **25 June 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**

International application No.
**PCT/JP2024/013759**

**C. DOCUMENTS CONSIDERED TO BE RELEVANT**

| Category* | Citation of document, with indication, where appropriate, of the relevant passages | Relevant to claim No. |
|---|---|---|
| A | CN 109616657 A (LANGFANG INSTITUTE OF PROCESS ENGINEERING, CAS) 12 April 2019 (2019-04-12) entire text | 1-12 |

Form PCT/ISA/210 (second sheet) (July 2022)

**INTERNATIONAL SEARCH REPORT**
**Information on patent family members**

International application No.
**PCT/JP2024/013759**

| Patent document cited in search report | Publication date (day/month/year) | Patent family member(s) | Publication date (day/month/year) |
|---|---|---|---|
| WO 2022/113498 A1 | 02 June 2022 | US 2023/0369569 A1<br>paragraphs [0015]-[0029], [0047]-[0051], claims 1-8<br>EP 4254539 A1<br>CN 116472619 A | |
| JP 2019-169286 A | 03 October 2019 | (Family: none) | |
| WO 2022/227494 A1 | 03 November 2022 | EP 4270544 A1<br>paragraphs [0002]-[0004]<br>KR 10-2023-0074250 A | |
| WO 2022/070542 A1 | 07 April 2022 | US 2023/0378468 A1<br>paragraphs [0014]-[0041], claims 1-4<br>EP 4224550 A1<br>CN 116157935 A | |
| CN 109616657 A | 12 April 2019 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2019169286 A